(19) Europäisches Patentamt
European Patent Office
Office européen des brevets

(11) **EP 2 085 927 B1**

(12) **EUROPEAN PATENT SPECIFICATION**

(45) Date of publication and mention
of the grant of the patent:
**26.10.2011 Bulletin 2011/43**

(51) Int Cl.:
*G06T 5/00* (2006.01)

(21) Application number: **08001589.4**

(22) Date of filing: **29.01.2008**

(54) **Constrained iterative blind deconvolution**

Iterative Blindentfaltung unter Nebenbedingungen

Déconvolution aveugle itérative contrainte

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.08.2009 Bulletin 2009/32**

(73) Proprietor: **Bergen Teknologioverforing AS**
**5006 Bergen (NO)**

(72) Inventors:
• **Radovan, Jirik**
**612 00 Brno (CZ)**
• **Torfinn, Michael Taxt**
**5021 Bergen (NO)**

(74) Representative: **HOFFMANN EITLE**
**Patent- und Rechtsanwälte**
**Arabellastraße 4**
**81925 München (DE)**

(56) References cited:
**WO-A-2006/054192**

• **JIRIK R ET AL: "Two-dimensional blind iterative deconvolution of medical ultrasound images" ULTRASONICS SYMPOSIUM, 2004 IEEE MONTREAL, CANADA 23-27 AUG. 2004, PISCATAWAY, NJ, USA,IEEE, vol. 2, 23 August 2004 (2004-08-23), pages 1262-1265, XP010784187 ISBN: 978-0-7803-8412-5**
• **KAPUR J N ET AL: "A NEW METHOD FOR GRAY-LEVEL PICTURE THRESHOLDING USING THE ENTROPY OF THE HISTOGRAM" COMPUTER VISION GRAPHICS AND IMAGE PROCESSING, ACADEMIC PRESS, DULUTH, MA, US, vol. 29, no. 3, 1 March 1985 (1985-03-01), pages 273-285, XP000566411**

**Description**

[Technical field]

The present invention relates to an image processing method applied on an image of a target, and to a computer program for carrying out such method. It also relates to an image processing unit and an image processing apparatus configured for processing an image of a target. The method, computer program, unit and apparatus may be used for the deconvolution of ultrasound images.

[Background]

In acoustics and ultrasound imagery, in particular in linear acoustics, an echo, which is also called a radiofrequency (RF) image, a received signal or an echographic image, may be modelled as the convolution of a sound sent in the medium and a function representing the various objects or elements that are reflecting the original sound. Additional noise may be added in the model.

In mathematical terms, the model may be expressed by the following equation:

$$\left(f * h\right) + w = g$$

wherein $f$ is the function representing various objects or elements that are reflecting the sound, $h$ is the signal representing the sound sent in the medium, $*$ is the convolution operator, $w$ is the additive noise, and $g$ is the radiofrequency (RF) image.

In medical applications, $f$ may be called the tissue function. The tissue function characterizes the distribution of specular reflectors and diffuse scatterers in the imaged area. For the sake of consistency, the function $f$ is called in what follows the target function.

The function $h$ represents the directional sensitivity of the transducer or, in other words, the pulse response of the imaging system. The function $h$ represents the characteristics of the imaging process. For the sake of consistency, the function $h$ is called in what follows the point spread function (PSF).

For consistency, the received signal or data $g$ is called in what follows the radiofrequency (RF) image.

In summary, the radiofrequency (RF) image may be modelled as the convolution of the target function and the point spread function (PSF), with additive noise.

The general problem arises of recovering the target function from the radiofrequency (RF) image. This recovering problem is a deconvolution problem.

The deconvolution problem is called a blind deconvolution problem when neither the target function nor the point spread function (PSF) is known. Since the point spread function (PSF) depends on the whole imaging system, including the interface between the measuring device and the probed medium, the point spread function (PSF) may be assumed to be unknown. The point spread function (PSF) is therefore, to a large extent, determined by the imaged medium. Thus, the point spread function (PSF) has to be estimated from the radiofrequency (RF) image together with the target function.

The prior art also includes R. Jiřík and T. Taxt, *Two-Dimensional Blind Iterative Deconvolution of Medical Ultrasound Images,* 2004 IEEE Ultrasonics Symposium, pp. 1262-1265. This paper relates to the blind iterative deconvolution of ultrasound images, wherein a homomorphic approach is used for determining initial estimates of the point spread function (PSF).

The fairly low spatial resolution of ultrasound images is a limiting factor in the clinical usefulness of medical ultrasound B-mode images. A B-mode image is a scan-converted log-amplitude image derived from a two-dimensional radiofrequency (RF) image formed by obtaining the echoes along a line-of-sight on the interface between the measuring device and the tissue or, more generally, the medium. The radiofrequency image is built up line by line by the single traces of radiofrequency signals. The signals cover an area of interest. The fairly low spatial resolution is still a limiting factor, even though the spatial image resolution of high-end ultrasound scanners was substantially improved in the recent past.

It is therefore desirable to provide an image processing method which solves or partially solves the above-mentioned problems.

[Summary]

Such an image processing method is provided by claim 1. Advantageous embodiments are described in the dependent claims.

The deconvolution of a radiofrequency (RF) image to recover a target function and a point spread function (PSF) is one way to increase the spatial resolution of ultrasound images, such as medical images.

In the process of estimating the point spread function (PSF) from the radiofrequency (RF) image, the point spread function (PSF) is generally not separable in the axial and lateral directions. The axial direction is the direction along the A-scan, i.e. along the pulse propagation. The lateral direction is perpendicular to the axial direction within the B-scan. In the radiofrequency image data, samples corresponding to the same depth (one row) are aligned along the lateral direction.

Since the point spread function (PSF) is generally not separable in the axial and lateral directions, it has to be estimated as a two-dimensional function. An approach for two-dimensional blind deconvolution of ultrasound images is an approach based on filtering in the two-dimensional cepstrum domain. This filtering is called homomorphic deconvolution or homomorphic filtering. In this approach, it is assumed that the point spread function (PSF) and the target function lie in different two-dimensional cepstrum bands.

A problem with the two-dimensional homomorphic deconvolution is that the approach is based on the simplified assumption that the two functions, i.e. the point spread function (PSF) and the target function, reside in separate bands of the two-dimensional cepstrum domain. Another drawback of the two-dimensional homomorphic deconvolution is the necessity for two-dimensional phase unwrapping, which is an ill-posed noise sensitive problem.

The image processing method of the invention is applied on an image of a target (such as a radiofrequency (RF) image), or is applied on a segment of an image of a target (such as a radiofrequency (RF) image). The method includes a deconvolution procedure including a blind deconvolution of the whole image, or a blind deconvolution of the whole segment respectively, to estimate a point spread function (PSF) characterizing the imaging process and a target function characterizing the distribution of reflectors and scatterers in the target. The blind deconvolution is an iterative blind deconvolution wherein the target function and the point spread function (PSF) are estimated and updated by alternating between the following equations:

$$F_{i+1}(k,l) = \mathcal{P}_1\left[G(k,l) \cdot \frac{H_i^*(k,l)}{|H_i(k,l)|^2 + \frac{\sigma_w^2}{\sigma_f^2}}\right],$$

$$H_{i+1}(k,l) = \mathcal{P}_2\left[G(k,l) \cdot \frac{F_{i+1}^*(k,l)}{|F_{i+1}(k,l)|^2 + \frac{\sigma_w^2}{\sigma_h^2 |H_0(k,l)|^2}}\right]$$

or by alternating between the following equations:

$$H_{i+1}(k,l) = \mathcal{P}_1\left[G(k,l) \cdot \frac{F_i^*(k,l)}{|F_i(k,l)|^2 + \frac{\sigma_w^2}{\sigma_h^2 |H_0(k,l)|^2}}\right],$$

$$F_{i+1}(k,l) = \mathcal{P}_2\left[G(k,l) \cdot \frac{H_{i+1}^*(k,l)}{|H_{i+1}(k,l)|^2 + \frac{\sigma_w^2}{\sigma_f^2}}\right]$$

In these equations, the following notations apply:

$F(k,l)$, $H(k,l)$ and $G(k,l)$ are respectively the discrete Fourier transforms of $f(m,n)$, the estimated target function, $h(m,n)$, the estimated point spread function, and $g(m,n)$, data representing the image, or the segment respectively; $m$, $n$ are the spatial-domain indices corresponding respectively to an axial and a lateral directions;

*i* is the iteration number;

$P_1$ and $P_2$ are projection operators applied in each iteration to enforce constraints to the estimated functions;

$\sigma_f$, $\sigma_h$ and $\sigma_w$ are respectively the standard deviation of the target function, the point spread function and the noise; and the superscript * denotes complex conjugation.

In the method of the invention, at least one of the following constraints are enforced:

(i) a known support region is supposed for the target function and all values outside the support region are set to zero;

(ii) a known support region identical to the size of the image data is supposed for the target function and all values outside the support region are set to zero;

(iii) a known support region is supposed for the point spread function and all values outside the support region are set to zero;

(iv) after estimation of the support region of the point spread function and the update thereof, the amplitude of the new estimate is binarized based on entropy maximization, dilatation is performed and the resulting mask specifies the support region of the point spread function;

(v) the point spread function is assumed to have zero mean;

(vi) the target function is assumed to have zero mean; and

(vii) the envelopes of at least the fundamental and second harmonic components of the image of the target, or the segment thereof respectively, are averaged.

The target is the probed, imaged medium, e.g. a portion of human body tissue in medical applications. The image of the target may be an ultrasonic image, but is not limited to the field of ultrasound imagery.

The method according to the invention improves two-dimensional homomorphic deconvolution of ultrasound images by means of blind iterative deconvolution. The method has the advantages of avoiding both the above-mentioned limitations of the two-dimensional homomorphic deconvolution, i.e. the assumption that the point spread function (PSF) and the target function lie in different two-dimensional cepstrum bands and the two-dimensional phase unwrapping problem. Resolution improvement has been observed. Tests on radiofrequency image data recorded from a tissue-mimicking phantom and tests on clinical radiofrequency images have shown that the deconvolution gives stable results of higher spatial resolution and better defined tissue structures than in the input images (input radiofrequency (RF) images) and than the results of the homomorphic deconvolution alone.

The deconvolution procedure may be applied to the complete radiofrequency image data. The spatial variance of the point spread function (PSF) is then not taken into account. This is a simplification, but it still leads to improved spatial resolution. The main advantage of this approach is the potential real-time application. The low number of iterations (in one embodiment: 3 iterations) and the global character of the method make it possible to implement the algorithm in real time on ultrasound scanners. This may require parallelization and pipelining of the computation, as shown in R. Jirik and T. Taxt, High-resolution ultrasonic imaging using fast two-dimensional homomorphic filtering, IEEE Trans. Ultrason. Ferroelec. Freq. Cont., vol. 53, no. 8, pp. 1440-1448, 2006, for a simpler deconvolution approach. A simplified version of the initial point spread function estimation may be used as well.

Alternatively, the deconvolution procedure may be locally applied on a segment of the radiofrequency (RF) image data. The spatial variance of the point spread function is then taken into account. In other words, this is a local application of the method of the invention. This may be implemented by dividing the radiofrequency (RF) image data into overlapping subimages, by local deconvolution and by merging the deconvolved subimages together. A skilled person would understand how to carry out the invention for instance in the light of T. Taxt and R. Jirik, Superresolution of ultrasound images using the 1st and 2nd harmonic signal, IEEE Trans. Ultrason. Ferroelec. Freq. Cont., vol. 51, no. 2, pp. 163-175, 2004. The choice of the subimage size is a compromise. Using larger subimages, the deconvolution is more reliable (because more information is available) but the spatial variance of the distortion is ignored to a larger extent.

In one embodiment, the initial image data, i.e. the image of the target, is acquired using harmonic imaging. In a further embodiment, both the fundamental and second harmonics of the initial image data are used.

A standard approach in harmonic imaging is to show only the second harmonic image, which has a higher spatial resolution. However, higher attenuation of the second harmonic leads to low signal from deep structures. This disadvantage may however be avoided as follows. The higher attenuation is compensated for by using both the fundamental and second harmonics. At the same time, the achieved spatial resolution is beyond the possibilities of second harmonic imaging alone. Hence, this approach is an alternative way of data processing in harmonic imaging where advantages of both the fundamental and second harmonic imaging are kept at the same time.

Constraints (vii) may be extended to higher harmonic components of the image, or segment respectively. For instance, the five first harmonic components, i.e. the fundamental and the second to the fifth harmonic components, may be taken into account. A broadband image recording system may be used, thus enabling recording of more harmonic components (in one embodiment: up to the fifth harmonic component). Then, the constraint may be weighted averaging of envelopes of all the harmonic components. A weighted averaging or a non-weighted averaging may be used. A weighted averaging generally provides better results than a non-weighted averaging because, for higher harmonic components, the attenuation is more pronounced, so that deeper structures need higher weight put on the fundamental and lower harmonics. The use of any number of harmonic components is contemplated within the context of the present invention.

The particular iterative optimization in the blind deconvolution of the deconvolution procedure according to the invention gives good results when constraints on the characteristic of the point spread function (PSF) and the target function are provided. The deterministic constraints applied in each iteration as a projection operator further stabilize the process.

In one embodiment, all constraints (i) to (vii) are enforced. This has been observed to provide very good results.

Other embodiments cover intermediate solutions wherein some of the constraints (i) to (vii) are enforced. In one embodiment, four of the constraints (i) to (vii) are enforced. In one embodiment, five of the constraints (i) to (vii) are enforced. In one embodiment, six of the constraints (i) to (vii) are enforced. In yet another embodiment, a significance metric is used to classify the effect of each of the constraints (i) to (vii) on the quality of the deconvolution (restoration) results, and any one of the three following options is selected: the four most significant constraints amongst the constraints (i) to (vii) are enforced, the five most significant constraints amongst the constraints (i) to (vii) are enforced, and the six most significant constraints amongst the constraints (i) to (vii) are enforced. These solutions provide improved restored images.

In one embodiment, six of the constraints (i) to (vii) are enforced, including constraint (vii). In one embodiment, five of the constraints (i) to (vii) are enforced, including constraint (vii). In one embodiment, four of the constraints (i) to (vii) are enforced, including constraint (vii). Advantages of constraint (vii) include the compensation of attenuation, as explained above, and speckle suppression.

In one embodiment, one or more additional constraints are enforced. This may include the constraint consisting in that the amplitude spectrum of the point spread function (PSF) is normalized, and may further include the lateral symmetry constraint. Both constraints are explained in more details below.

More explanations about the constraints are provided in the detailed description of the invention.

In one embodiment, the blind deconvolution used to obtain the initial estimation of the point spread function (PSF) and the target function for the iteration is a blind homomorphic deconvolution.

In one embodiment, the number of iterations of the iterative blind deconvolution of the deconvolution procedure is larger than 2, and preferably is 3.

Experiments have shown that 3 to 5 iterations provide very good results and this makes real-time implementation more convenient. However further iterations (in one embodiment: up to 12 iterations) provide yet slightly better results.

In one embodiment, the iterative blind deconvolution of the local deconvolution procedure is based on the Bayesian approach.

In one embodiment, an image processing method applied on an image of a target is provided. Said image processing method includes a local deconvolution procedure including a division of the image into image segments, an iterative blind deconvolution of each segment separately, including the method as described above and applied on each segment, to estimate a local point spread function and a local target function, and an estimation of the target function for the whole image based on the local target functions.

In one embodiment, dividing the image data into image segments is made only in the axial direction, only in the lateral direction or both in the axial and lateral directions.

In one embodiment, an image processing method applied on an image of a target is provided including a global deconvolution procedure and a local deconvolution procedure. The global deconvolution procedure includes the method described above and applied on the whole image, to estimate a point spread function characterizing the imaging process and a target function characterizing the distribution of reflectors and scatterers in the target. Then, the local deconvolution procedure includes, firstly, a division of the image into image segments; secondly, an iterative blind deconvolution of each segment separately, including the method described above and applied on each segment, to estimate a local point spread function and a local target function, wherein an initial estimate in the iterative blind deconvolution is based on an output of the global deconvolution procedure; and, thirdly, an estimation of the target function for the whole image based on the local target functions.

In the preceding embodiment, dividing the image data into image segments may be made only in the axial direction, only in the lateral direction or both in the axial and lateral directions.

In one embodiment of the above-described image processing method including a global deconvolution procedure and a local deconvolution procedure, an initial estimate in the iterative blind deconvolution of the local deconvolution procedure is based on an output of the global deconvolution procedure, by using either the point spread function estimated by a global deconvolution procedure or the target function estimated by a global deconvolution procedure.

The above-described image processing method including a global deconvolution procedure and a local deconvolution procedure is one embodiment of the invention. It has the following advantages. The two-dimensional homomorphic deconvolution is used only for the initial estimation. This avoids the limitation of homomorphic deconvolution, namely the need for two-dimensional phase unwrapping and the assumption that the target function and the point spread function (PSF) are represented by non-overlapping bands in the cepstrum domain.

Instead of carrying out a two- or three-dimensional deconvolution procedure either to the whole image or to overlapping sub-images, the method of the embodiment makes use of the two procedures. The global deconvolution is more robust in the sense that the process image contains more data, but the spatial variance of the point spread function (PSF) is ignored. The local deconvolution has the opposite advantages and disadvantages. The method of the embodiment makes use of both approaches in a particular manner and sequence. The global deconvolution is used to compute the initial estimate for the subsequent local deconvolution. This gives a robust, yet locally adapted deconvolution.

In the global deconvolution procedure, a deconvolution is applied to the whole radiofrequency (RF) image, i.e. the whole recorded image. "Global" means in this context that the deconvolution procedure is applied to the whole radiofrequency (RF) image, or to the whole zone of interest in the radiofrequency (RF) image. At the end of the global deconvolution procedure, the estimated point spread function (PSF) is the global part of the point spread function (PSF), which in reality varies locally (notably, but not exclusively, because the interface between the probe and the target has varying properties along the line-of-sight).

The blind deconvolution in the global deconvolution procedure may for instance be a two- or three-dimensional blind deconvolution process, or a time-varying two-dimensional (thus resulting in a three-dimensional) or a time-varying three-dimensional (thus resulting in a four-dimensional) blind deconvolution process. This also applies to the general deconvolution procedure of the invention.

The global deconvolution gives robust estimates of the point spread function (PSF). They are the initial estimates for the subsequent local deconvolution which may be carried out using the same iterative algorithm as the global deconvolution. The local deconvolution procedure takes the spatial variability of the point spread function (PSF) into account and therefore further refines the estimates by including the locally varying components.

In the local deconvolution procedure, to better cope with the spatial variance of the point spread function (PSF), the input image is first divided into small overlapping sub-images or segments where the point spread function (PSF) is assumed to be constant. The size of the sub-images is a compromise. The larger the sub-images, the more data is available for the point spread function (PSF) estimation. On the other hand, large sub-images or segments take the spatial variance of the point spread function (PSF) in a less pronounced extent.

Then, the deconvolution is performed locally on each subimage or segment separately. "Local" means in this context that the deconvolution procedure is applied independently to segments of the whole radiofrequency (RF) image, or of the whole zone of interest in the radiofrequency (RF) image.

Finally, the deconvolved sub-images or segments are merged together. That is, the estimation of the target function for the whole image or zone of interest is based on the local target functions obtained for each segment.

In one embodiment of the method, the iterative blind deconvolution of the local deconvolution procedure is based on the Bayesian approach.

The invention also relates to an image processing unit, to an image processing apparatus, to a computer program and to a scanner. Advantageous embodiments are described in the dependent claims.

The image processing unit of the invention is configured to process an image of a target or a segment of an image of a target. The image processing apparatus is configured for carrying out a blind deconvolution of the whole image, or of the whole segment respectively, to estimate a point spread function characterizing the imaging process and a target function characterizing the distribution of reflectors and scatterers in the target. The blind deconvolution is an iterative blind deconvolution wherein the target function and the point spread function are estimated and updated by alternating between the following equations:

$$F_{i+1}(k, l) = \mathcal{P}_1\left[G(k, l) \cdot \frac{H_i^*(k, l)}{|H_i(k, l)|^2 + \frac{\sigma_w^2}{\sigma_f^2}}\right],$$

$$H_{i+1}(k, l) = \mathcal{P}_2\left[G(k, l) \cdot \frac{F_{i+1}^*(k, l)}{|F_{i+1}(k, l)|^2 + \frac{\sigma_w^2}{\sigma_h^2 |H_0(k, l)|^2}}\right]$$

or between the following equations:

$$H_{i+1}(k,l) = \mathcal{P}_1\left[G(k,l) \cdot \frac{F_i^*(k,l)}{|F_i(k,l)|^2 + \frac{\sigma_w^2}{\sigma_h^2|H_0(k,l)|^2}}\right];$$

$$F_{i+1}(k,l) = \mathcal{P}_2\left[G(k,l) \cdot \frac{H_{i+1}^*(k,l)}{|H_{i+1}(k,l)|^2 + \frac{\sigma_w^2}{\sigma_f^2}}\right]$$

wherein the above-mentioned notations equally apply and at least one of the above-mentioned constraints is enforced.

[Brief description of the drawings]

Embodiments of the present invention shall now be described, in conjunction with the appended figures, in which:

Figure 1a, 1b and 1c show schematic flow charts of embodiments of a deconvolution procedure, a global deconvolution procedure and a local deconvolution procedure of the method according to the invention;

Figure 2a shows a schematic flow chart of a local deconvolution procedure in one embodiment of the method according to the invention;

Figure 2b shows details of a portion of a schematic flow chart of a local deconvolution procedure in one embodiment of the method according to the invention;

Figure 2c shows a schematic flow chart of one embodiment of the method according to the invention, including both a global deconvolution procedure and a local deconvolution procedure;

Figure 3a, 3b, 3c, 4a and 4b show schematic representations of image processing apparatuses according to embodiments of the invention;

Figure 5 shows phantom images of three point targets, wherein

(a) shows the input first harmonic image,
(b) shows the input second harmonic image,
(c) shows the result of the deconvolved, reference method, and
(d) shows the result of the deconvolved, iterative method;

Figure 6 shows phantom images of a cyst-mimicking spherical object wherein

(a) shows the input fundamental harmonic image,
(b) shows the input second harmonic image,
(c) shows the result of the deconvolved, reference method, and
(d) shows the result of the deconvolved, iterative method;

Figure 7 shows images of pancreas area, wherein

(a) shows the input image, fundamental harmonic,
(b) shows the input image, second harmonic,
(c) shows the result of the reference deconvolution,
(d) shows the initial estimate,
(e) shows the result of the iterative deconvolution, and
(f) shows the structures in the image:

VL -   vena lienalis,
VC -   vena cava inferior,

VRS - vena renalis sinistra,
A - aorta,
AMS - arteria mesenterica superior,
PG - pancreatic gland,
CB - cortical bone of lumbal vertebral body;

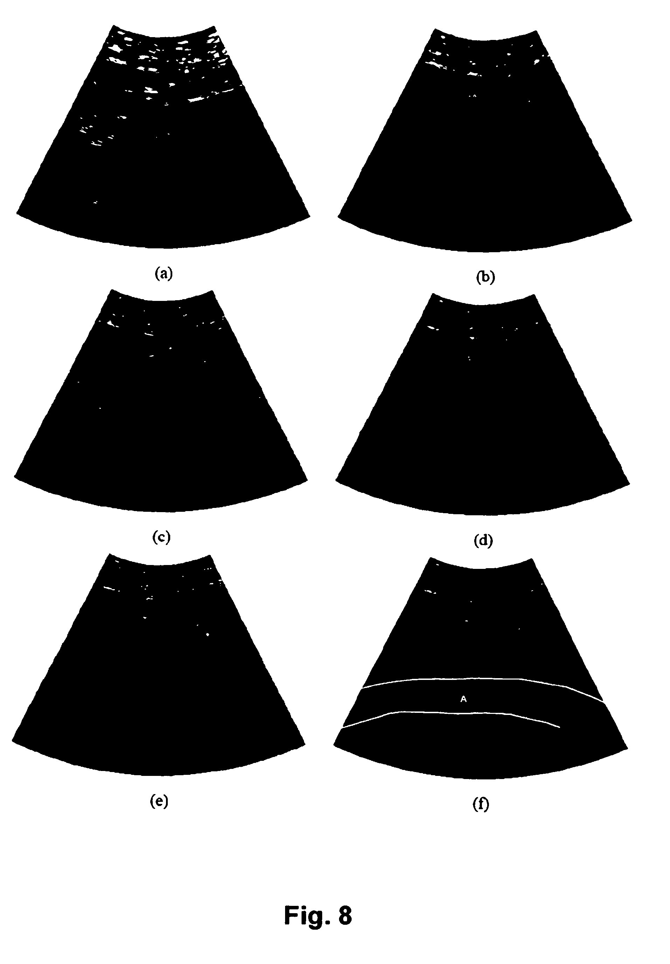

Figure 8 shows images of abdominal aorta, wherein

(a) shows the input image, fundamental harmonic,
(b) shows the input image, second harmonic,
(c) shows the result of the reference deconvolution,
(d) shows the initial estimate,
(e) shows the result of the iterative deconvolution, and
(f) shows the structures in the image: A - aorta;

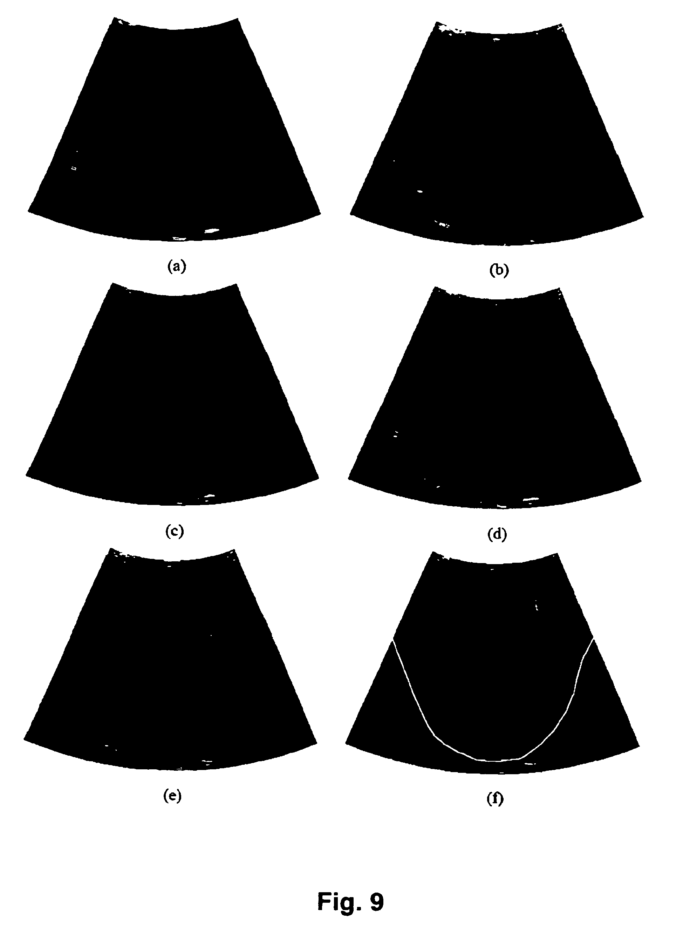

Figure 9 shows images of bladder, wherein

(a) shows the input image, fundamental harmonic,
(b) shows the input image, second harmonic,
(c) shows the result of the reference deconvolution,
(d) shows the initial estimate,
(e) shows the result of the iterative deconvolution, and
(f) shows the structures in the image: inner border of the bladder.

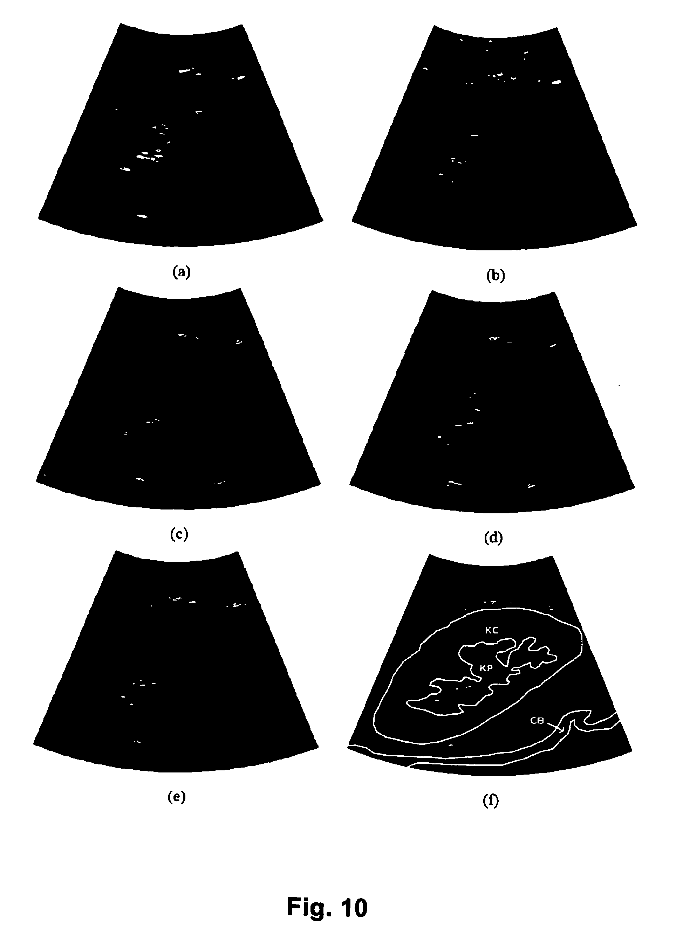

Figure 10 shows images of kidney, wherein

(a) shows the input image, fundamental harmonic,
(b) shows the input image, second harmonic,
(c) shows the result of the reference deconvolution,
(d) shows the initial estimate,
(e) shows the result of the iterative deconvolution result, and
(f) shows the structures in the image:

KC - kidney cortex,
KP - kidney pelvis,
CB - cortical bone of lumbal vertebral bodies;

and

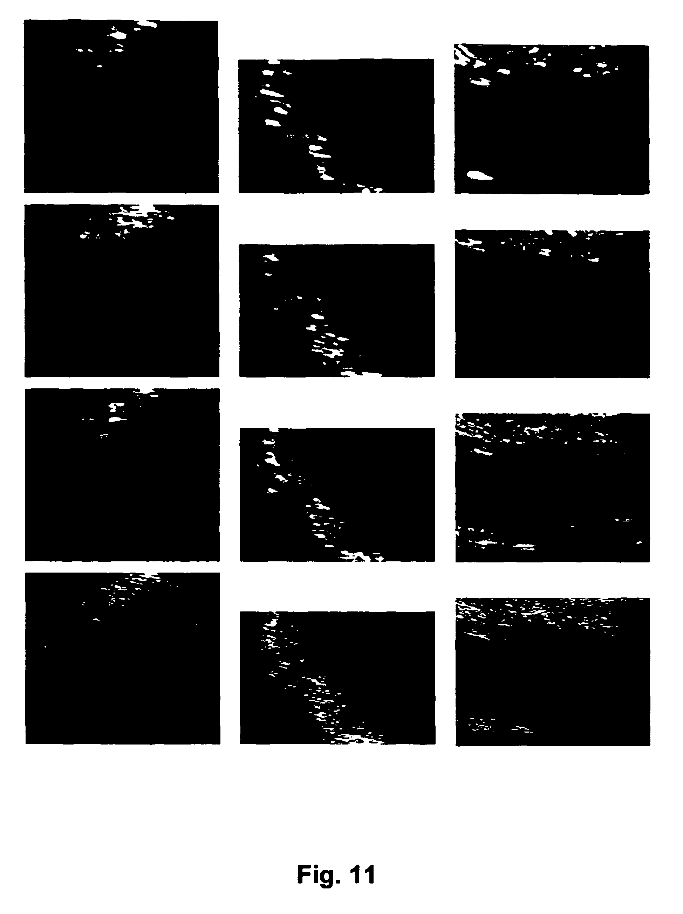

Figure 11 shows details of
aorta and arteria mesenterica superior (left),
bladder wall (middle), and
longitudinal cross section of aorta (right),
wherein, from top to bottom, are shown:

the input fundamental harmonic image,
input second harmonic image,
results of the reference deconvolution, and
results of the iterative deconvolution.

[Detailed description]

The present invention shall now be described in conjunction with specific embodiments. It may be noted that these specific embodiments serve to provide the skilled person with a better understanding, but are not intended to in any way restrict the scope of the invention, which is defined by the appended claims. In particular, the embodiments described independently throughout the description can be combined to form further embodiments to the extent that they are not mutually exclusive.

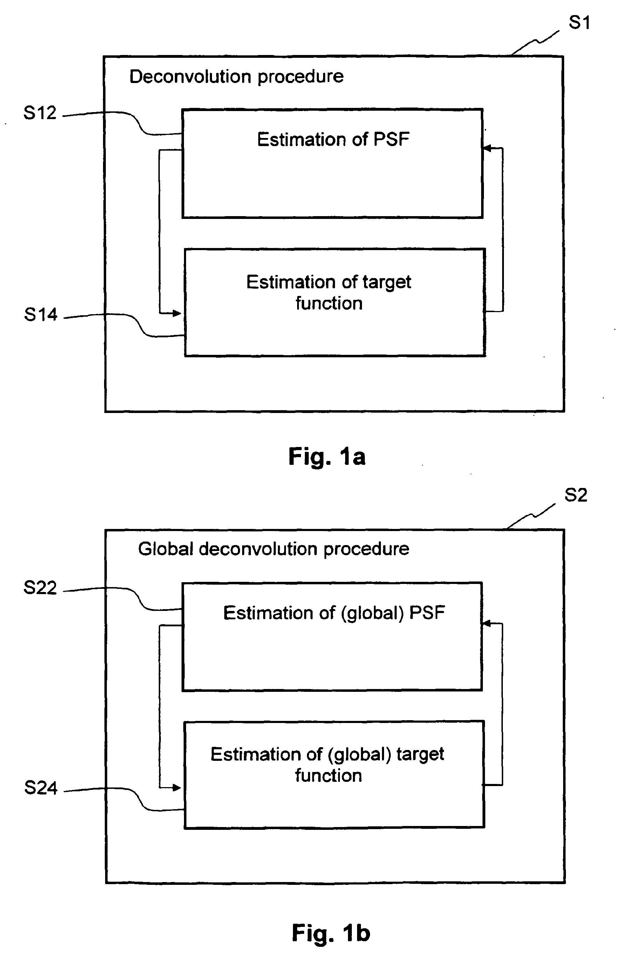

Fig. 1a shows a schematic flow chart of a deconvolution procedure S1 according to one embodiment of the invention. It includes alternating between an estimation s12 of the point spread function (PSF) and an estimation S14 of the target function.

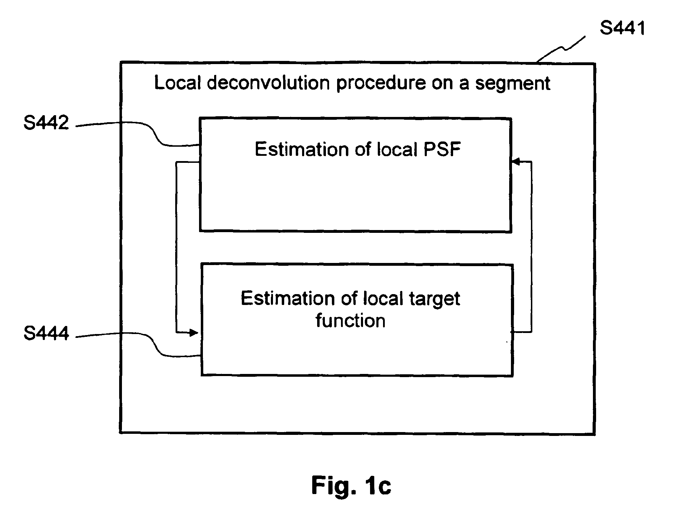

The deconvolution procedure S1 may be applied in a global manner, i.e. the whole image of the target, as illustrated in Fig. 1b, or in a local manner. i.e. on a segment of an image of a target, as illustrated in Fig. 1c.

The global deconvolution procedure S2 illustrated in Fig. 1b includes alternating between an estimation s22 of the global point spread function (PSF) and estimation S24 of the global target function. The global deconvolution procedure S2 is an iterative blind deconvolution including alternating between estimating S22 the point spread function (PSF) while the target function is fixed and estimating S24 the target function while the point spread function (PSF) is fixed. This enables to apply constraints separately on the point spread function (PSF) and on the target function. The method illustrated in Fig. 1b, when used as a stand-alone global deconvolution procedure, is very convenient for real-time applications, and therefore for use in or with a scanner for instance.

The local deconvolution procedure S441 illustrated in Fig. 1c is applied on a segment of an image. It includes alternating between an estimation s442 of the local point spread function (PSF) and estimation S444 of the local target function. In this embodiment, a process of alternating between estimating S442 the local point spread function (local PSF) while the local target function is fixed and estimating S444 the local target function while the local point spread function (local PSF) is fixed is carried out. This enables to apply local constraints separately to the local point spread function (local PSF) and to the local target function.

Referring back to the embodiment illustrated in Fig. 1a, the input in the method is the radiofrequency (RF) image of the target (not illustrated). It may for instance be an ultrasound image. A skilled person would understand how to produce such an image and the parameters that should be taken into account in order to have an input image with a good resolution in view of which features of the target have to be analyzed. For instance, the skilled person would understand that lower frequencies produce less resolution but produce an image deeper in the body. Frequencies from 7-15 MHz are generally used to probe the superficial structure (muscles, tendons,...), while frequencies from 1-6 MHz are used to probe deeper structures (liver, kidney,...). The sound is partially reflected from the layers between different tissues. That is, sound is reflected anywhere where there are density changes in the body: for instance blood cells in the blood plasma, small structures in organs,....

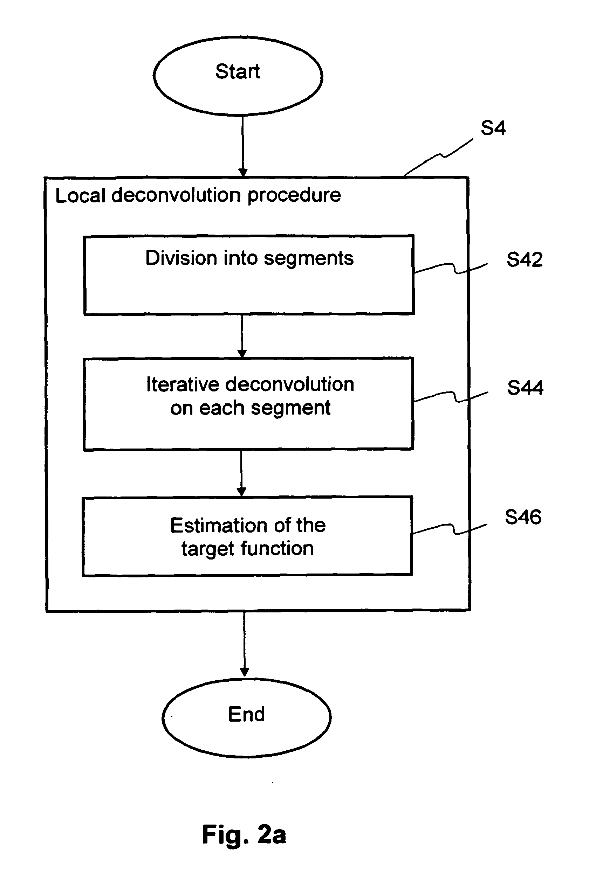

Fig. 2a is a flowchart of a local deconvolution procedure S4 in one embodiment of the invention. It is applied on an image. It includes dividing s42 the image into segments (in one embodiment: into overlapping images), performing s44 the iterative deconvolution on each segment, and estimating s46 the target function. In one embodiment, there is no need for a preceding global deconvolution. The initial estimate may be obtained by local homomorphic deconvolution (same initial estimation as in one embodiment of the global deconvolution but applied instead to a segment). The local deconvolution is computationally more demanding than the global deconvolution but gives better results. In an alternative embodiment, there is a preceding global deconvolution, which needs not be iterative, and the initial estimate of the local point spread function (local PSF) or the local estimation of the target function is the result of the global deconvolution.

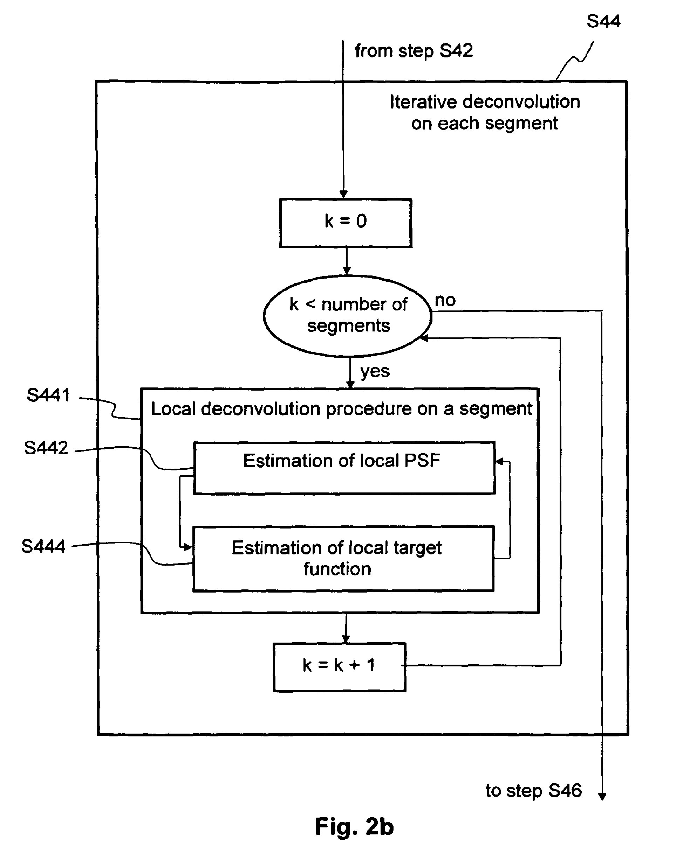

Fig. 2b shows details of a step of performing s44 the iterative deconvolution on each segment in one embodiment of the invention. k represents the index of a segment. After initialization "k = 0", an iteration is performed on all segments. For each segment, a local deconvolution procedure is performed, by alternating between the estimation of the local point spread function (PSF) and the estimation of the local target function, using the equations and constraints described above.

Fig. 2b illustrates only one embodiment. In other embodiments (not illustrated), parallel computation is performed instead.

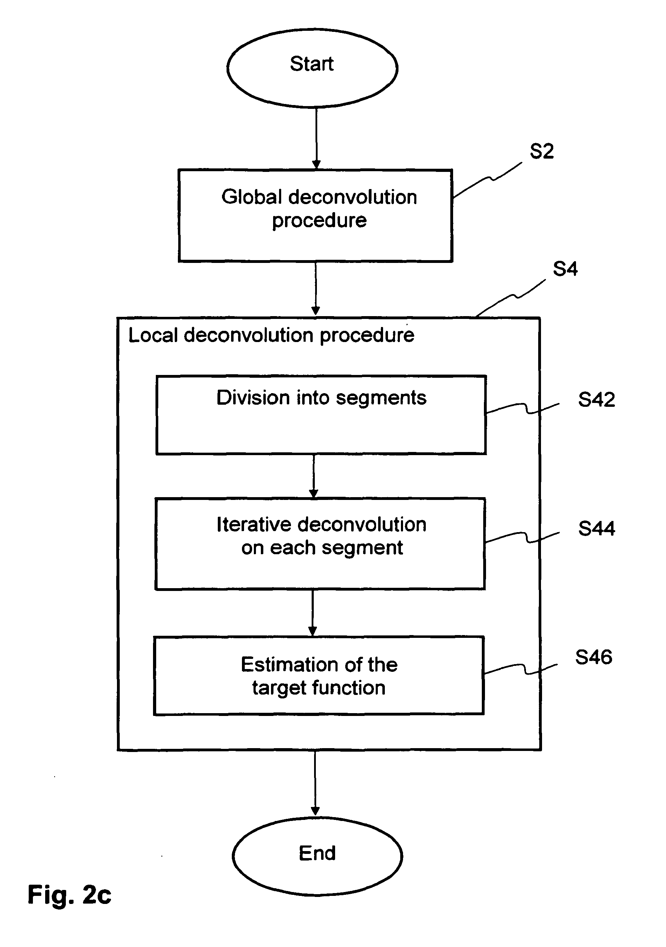

Fig. 2c shows a schematic flow chart of a method according to one embodiment of the invention. First, a global deconvolution procedure S2 is carried out. Then, a local deconvolution procedure S4 is carried out.

The input image is first processed in the global deconvolution procedure S2. In this procedure, a blind deconvolution of the whole image is performed in order to estimate the point spread function (PSF) and the target function. The global deconvolution procedure S2 needs not be iterative but may be so.

The result of the global deconvolution procedure S2 is used in a local deconvolution procedure S4. The local deconvolution procedure S4 includes, first, a division S42 of the whole image into image segments or sub-images. Next, an iterative blind deconvolution S44 of each segment separately is carried out in order to estimate a local point spread function (local PSF) and a local target function. The initial estimate in the iterative blind deconvolution S44 is based on an output, i.e. a result, of the global deconvolution procedure S2, described above.

Finally, in the local deconvolution procedure S4, an estimation S46 is performed for estimating the target function for the whole image based on the local target functions obtained in the iterative blind deconvolution step S44. The step S46 includes merging the results of the local processing to provide a global output of the image processing method.

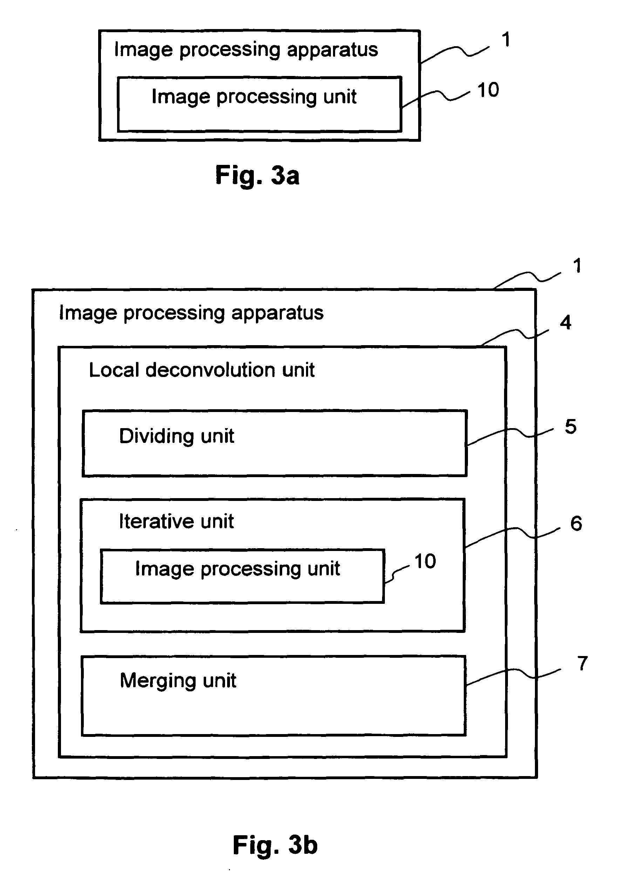

Fig. 3a illustrates an embodiment of an image processing apparatus 1 of the invention including an image processing unit 10. The image processing unit 10 may be more generally defined as an image processing means for performing the above-described image processing method. The image processing apparatus 1 may be included into a scanner (not illustrated). Furthermore, within the context of the invention, the image processing unit 1 may comprise memory means or a memory unit (RAM, ROM, ...), a computer processing unit (CPU) and any components of a computer configured for processing images.

Fig. 3b illustrates an embodiment of an image processing apparatus 1 of the invention including a local deconvolution unit 4. The local deconvolution unit 4 includes a dividing unit 5, an iterative unit 6 and a merging unit 7. The iterative unit 6 includes an image processing unit 10. More precisely, the iterative unit 6 is configured to carry out an iterative blind deconvolution on each segment separately, by causing the image processing unit 10 (e.g. by instructing the image processing unit 10 through providing appropriate parameters thereto) to carry out the blind deconvolution on each segment, to estimate the respective local point spread function (local PSF) and the respective local target function.

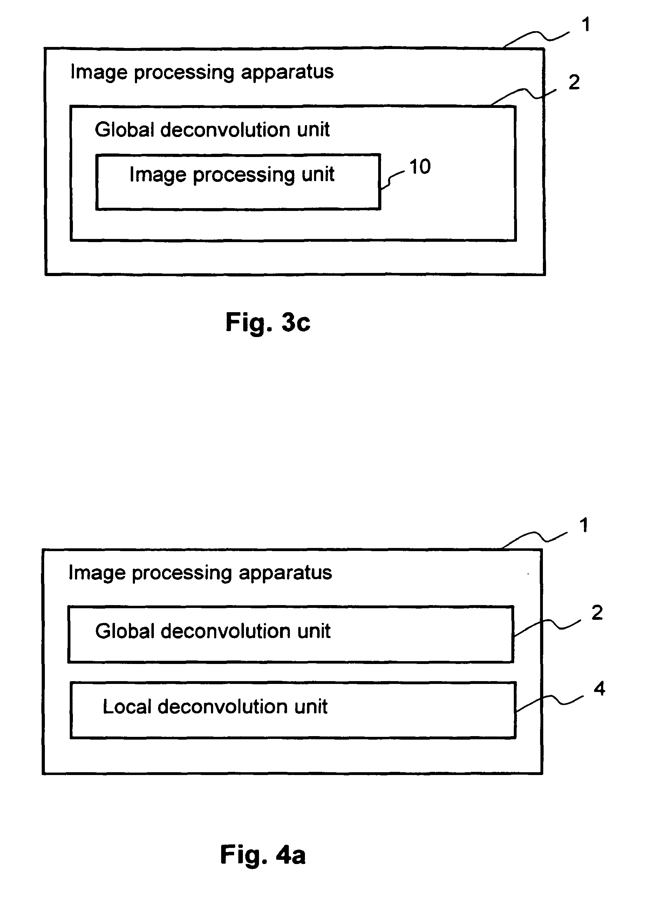

Fig. 3c illustrates an embodiment of an image processing apparatus 1 of the invention including a global deconvolution unit 2. The global deconvolution unit 2 includes an image processing unit 10. It is convenient for real-time applications not to perform any local deconvolution.

Fig. 4a illustrates a schematic representation of an apparatus 1 according to one embodiment of the invention including a global deconvolution unit 2 and a local deconvolution unit 4. The global deconvolution unit 2 may be more generally defined as a global deconvolution means for performing the above-described global deconvolution procedure S2. Likewise, the local deconvolution unit 4 may be more generally a local deconvolution means for performing the above-described local deconvolution procedure S4.

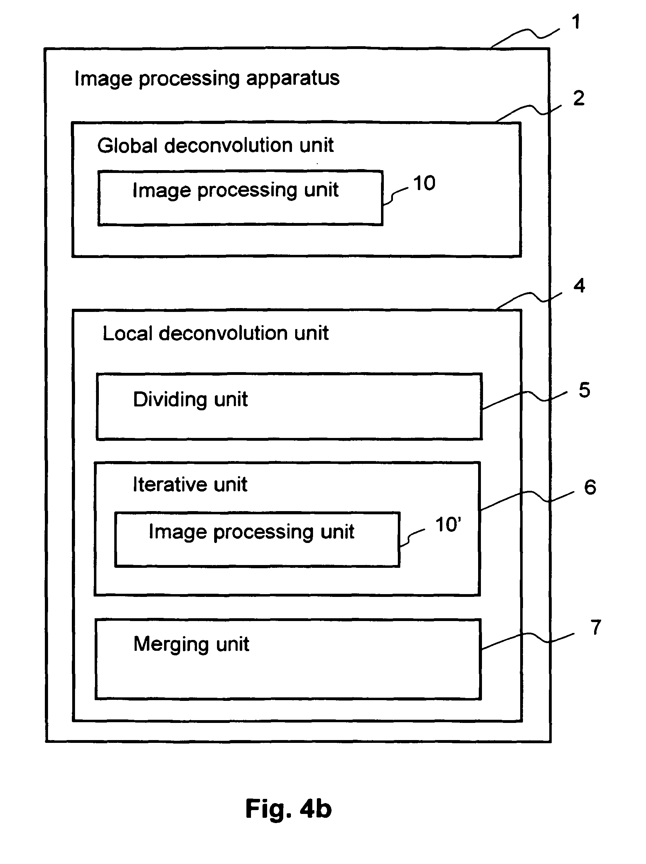

Fig. 4b illustrates details of the image processing apparatus 1 of Fig. 4a. The image processing unit 10' of the iterative unit 6, as illustrated, is configured to carry out a blind deconvolution on each segment to estimate the respective local point spread function (local PSF) and the respective local target function. The initial estimate in the iterative blind deconvolution on a segment is based on the output of the global deconvolution unit 2. The initial estimate in the iterative blind deconvolution S44 carried out by the local deconvolution unit 4 may be based on an output of the global deconvolution unit 2 by using either the point spread function estimated by a global deconvolution unit 2 or the target function estimated by a global deconvolution unit 2.

The image processing unit 10 and image processing unit 10' may be one common image processing unit, i.e. one common computer software procedure or function, or one common hardware unit or portion of integrated circuit.

The apparatus 1 (as illustrated in Fig. 3a-4b) may be integrated into a scanner or any other apparatus in the form of software-embedded or hardware-embedded component, or in the form of external software or hardware component.

One embodiment of the method according to the invention will now be described in more details. To this end, a model of distortion is first described. The model of distortion is a physical model for understanding the process of creation of the radiofrequency (RF) image. This will also provide more insight into the method of the invention.

The input image for the deconvolution is the radiofrequency (RF) image data recorded by a sector scanner. The data are processed in spatial polar coordinates. The image data acquired using harmonic imaging are considered. Thus, the radiofrequency signals contain both the first (fundamental) and second harmonics. In case of weak scattering, the interaction of the tissue and the ultrasound wave is approximately linear and the Born approximation (C. R. Hill, J. C. Bamber, and G. R. ter Haar, Physical Principles of Medical Ultrasonics, John Wiley & Sons, Inc., 2002) can be used. The approximation has been used in ultrasound image restoration to keep the model of the imaging process feasible, although the assumption is not valid for strong reflections. The assumption is used as an approximation also here.

Then, the distortion of the radiofrequency (RF) image can be modelled using a spatially variant linear operator. For a small subimage of the complete radiofrequency (RF) image, a spatially invariant distortion can be assumed:

$$g_s(m,n) = f_s(m,n) * h_s(m,n) + w_s(m,n) . \qquad (1)$$

The operator * stands for two-dimensional (2-D) convolution. $m$, $n$ are the spatial-domain indices corresponding to the axial and lateral directions. $g_s(m,n)$ is the received radiofrequency (RF) image data. $f_s(m,n)$ is the target function (or tissue function) describing the distribution of reflectors and scatterers in the imaged area. $h_s(m,n)$ is the point spread function (PSF) of the imaging process and $w_s(m,n)$ is a noise term, accounting for the measurement noise of the electronic circuits.

The point spread function (PSF) in the frequency domain can be modelled as:

$$H_s(\omega_1, \omega_2) = I_s(\omega_1, \omega_2) \cdot E_s(\omega_1, \omega_s) . \qquad (2)$$

$I_s(\omega_1,\omega_2)$ is the two-dimensional (2-D) spectrum of the incident beam at the subimage position. It depends on the tissue and the position. For simple tissue models, it can be modelled, e.g. using the Khokhlov-Zabolotskaya-Kuznetsov (KZK) wave equation, or measured (see Y. Li and J. A. Zagzebski, Computer model for harmonic ultrasound imaging, IEEE Trans. Ultrason. Ferroelec. Freq. Cont., vol. 47, no. 5, pp. 1259-1272, 2000, and M. D. Cahill and C. Baker, Numerical simulation of the acoustic field of a phased-array medical ultrasound scanner, J. Acoust. Soc. Am., vol. 104, no. 4, pp. 1274-1283, 1998).

The incident beam accounts for several phenomena:

1. The diffraction pattern given by the transducer geometry and focusing,
2. The electroacoustical transfer function of the transducer on emission and its electrical excitation,
3. Attenuation of the tissue on the propagation path from the transducer to the imaged location,
4. Nonlinear pulse propagation properties of the tissue and, hence, generation of the second harmonic.

$E_s(\omega_1,\omega_2)$ is the transfer function of the echo back-propagation. The energy of the echo wave is substantially lower than that of the emitted wave. For low wave intensity, the linear model of ultrasound propagation is a good approximation (C. R. Hill, J. C. Bamber, and G. R. ter Haar, Physical Principles of Medical Ultrasonics, John Wiley & Sons, Inc., 2002). Hence, similarly to J. A. Jensen, Estimation of pulses in ultrasound B-scan images, IEEE Trans. Med. Imag., vol. 10, no. 2, pp. 164-172, 1991, J. A. Jensen, Deconvolution of ultrasound images, Ultrasonic Imaging, vol. 14, no. 1, pp. 1-15, 1992, J. A. Jensen, Estimation of in vivo pulses in medical ultrasound, Ultrasonic Imaging, vol. 16, no. 3, pp. 190-203, 1994, the ultrasound propagation can be modelled as a combination of several components:

$$E_s(\omega_1,\omega_2) = R_s(\omega_1,\omega_2)\cdot H_{tr}(\omega_1)\cdot A_s(\omega_1)\,. \qquad (3)$$

$R_s(\omega_1,\omega_2)$ is the spatial impulse response of the transducer on receiving. It describes the transducer geometry and focusing on receive. It can be modelled (using a Rayleigh integral) or measured (see Y. Li and J. A. Zagzebski, Computer model for harmonic ultrasound imaging, IEEE Trans. Ultrason. Ferroelec. Freq. Cont., vol. 47, no. 5, pp. 1259-1272, 2000).

$H_{tr}(\omega_1)$ is the electroacoustical transfer function of the transducer on receive.

$A_s(\omega_1)$ is the tissue transfer function due to attenuation on the propagation path from the imaged location back to the transducer. Only the component $H_{tr}(\omega_1)$ is independent of both the subimage position and tissue properties.

It is herewith convenient to approximate the spatially variant components of the point spread function by their global parts. This means that the point spread function is assumed spatially invariant in the whole image and the following model of the complete radiofrequency image data can be used:

$$g(m,n) = f(m,n) * h(m,n) + w(m,n)\,. \qquad (4)$$

The notation corresponds to the one in Equation (1). Then, the deconvolution can be applied to the whole image. The simplification means that only the global degradation is identified and removed from the input radiofrequency data. The locally varying components remain present.

Based on this distortion model, the embodiment and the deconvolution process performed according to the embodiment may be described as follows.

The input image of the deconvolution is formed by raw radiofrequency signals corresponding to all A-scans, arranged into a matrix.

More precisely, the input image data of the deconvolution is derived from the raw data measured by the ultrasound probe in the broadband imaging mode, recording both the first and second harmonic signals. The spectrum of the raw radiofrequency signal is first shifted with the demodulation frequency -Δf, which corresponds to the lowest frequency of the fundamental harmonic band. This operation removes the low-frequency band between the zero frequency and the fundamental harmonic band. Then, the sampling frequency is decreased with the Nyquist frequency as close to the highest frequency component of the resulting signal as possible. Hence, the frequency bands with no useful signal (only noise) are removed from the signal. This is important for the homomorphic transform used for initial estimation of the point spread function (PSF).

The resulting signals corresponding to all A-scans of one image frame are arranged into a matrix. This matrix is the input of the deconvolution and is further referred to as the radiofrequency image data.

The deconvolution may be done in one step, i.e. only a global step or only a local step, or in two steps, a global step and a local step. The global deconvolution is applied to the whole radiofrequency (RF) image. This means that the estimated point spread function (PSF) is the global part of the locally varying point spread function.

If the deconvolution is performed in two steps, the global deconvolution gives robust estimates of the point spread function (PSF) and the target (tissue) function. They are the initial estimates for the subsequent local deconvolution which is done using the same iterative algorithm as the global deconvolution. This further refines the estimates by including the locally varying components.

If the deconvolution is performed in two steps, to cope with the spatial variance of the point spread function (PSF) in the local deconvolution, the input image is first divided into small overlapping subimages where the point spread function (PSF) is assumed constant. The images are divided only in the axial direction because in this direction the point spread function (PSF) varies to a much larger extent. The size of the subimages is a compromise. The larger the subimage, the more data for the point spread function (PSF) estimation. On the other hand, large subimages take its spatial variance less into account. The deconvolution is done locally on each subimage separately. Finally, the deconvolved subimages are merged together.

The following part of the description treats only a deconvolution procedure S1 applied globally.

The iterative deconvolution used in this embodiment is based on the Bayesian approach (see J. L. Starck, E. Pantin, and F. Murtagh, Deconvolution in astronomy: a review, Publications of the Astronomical Society of the Pacific, vol. 114, no. 800, pp. 1051-1069, 2002). Let us first assume that the point spread function $h(m,n)$ is known.

The Bayes theorem for the distortion model Equation (4) is (the spatial indices $m,n$ are omitted for better readability):

$$p(f|g) = \frac{p(g|f)p(f)}{p(g)} \qquad (5)$$

$p(f|g)$ is the posterior probability density of the target function (or tissue function) $f$ given the measured (distorted) radiofrequency image $g$.

$p(g|f)$ is the conditional probability density of the measured image $g$ given the target function (or tissue function) $f$.

$p(f)$ and $p(g)$ are the probability densities of the target function (or tissue function) and the measured image, respectively.

For the blind deconvolution, Equation (5) is extended to

$$p(f, h|g) = \frac{p(g|f, h)p(f)p(h)}{p(g)} \qquad (6)$$

where $p(h)$ is the probability density of the point spread function (PSF). Maximization of $p(f,h|g)$ in Equation (6) with respect to $f$ and $h$ corresponds to the search for the most probable target function (or tissue function) $f$ and point spread function $h$, given the measured image $g$. Since $p(g)$ is not a function of $f$ or $h$, it can be left out:

$$\tilde{f}, \tilde{h} = arg\{\max_{f,h} p(g|f, h)p(f)p(h)\}. \qquad (7)$$

The probability density $p(g|f,h)$ is usually derived from the statistics of the noise term. For ultrasound imaging, the measurement noise ($w(m,n)$ in Equation (4)) is modelled as independent identically distributed random variables obeying the Gaussian distribution (see J. Ng, R. Prager, N. Kingsbury, G. Treece, and A. Gee, Wavelet restoration of medical pulse-echo ultrasound images in an EM framework, IEEE Trans. Ultrason. Ferroelec. Freq. Cont., vol. 54, no. 3, pp. 550-568, 2007) (i.e. white Gaussian signal), as it is a standard model for the noise of analog amplifiers (used in the receiver part of the ultrasound scanner).

Denoting $\sigma_w$ the standard deviation of the noise,

$$p(g|f,h) = \prod_{m,n} \frac{1}{\sigma_w \sqrt{2\pi}} e^{\frac{|g(m,n) - f(m,n) * h(m,n)|^2}{2\sigma_w^2}}$$

(8)

The target function (or tissue function) $f(m,n)$ is modelled as independent identically distributed random variables. The probability distribution $p(f)$ can be assumed Gaussian (see J. A. Jensen, J. Mathorne, T. Gravesen, and B. Stage, Deconvolution of in-vivo ultrasound B-mode images, Ultrasonic Imaging, vol. 15, no. 2, pp. 122-133, 1993, R. Jirik and T. Taxt, High-resolution ultrasonic imaging using fast two-dimensional homomorphic filtering, IEEE Trans. Ultrason. Ferroelec. Freq. Cont., vol. 53, no. 8, pp. 1440-1448, 2006, J. Ng, R. Prager, N. Kingsbury, G. Treece, and A. Gee, Wavelet restoration of medical pulse-echo ultrasound images in an EM framework, IEEE Trans. Ultrason. Ferroelec. Freq. Cont., vol. 54, no. 3, pp. 550-568, 2007). This model is suitable for areas of diffuse scatterers (see J. A. Jensen and P. Munk, Computer phantoms for simulating ultrasound B-mode and cfm images, in 23rd Acoustical Imaging Symposium, Boston, USA, 1997, pp. 13-16, O. Michailovich and D. Adam, A novel approach to the 2-D blind deconvolution problem in medical ultrasound, IEEE Trans. Med. Imag., vol. 24, no. 1, pp. 86-104, 2005).

More realistic probability models take also specular reflectors into account by assuming e.g. a Laplacian distribution $p(f)$ (O. Michailovich and D. Adam). Herewith, the white Gaussian distribution is assumed because it leads to a computationally more efficient procedure, using Wiener filtering, as will be shown below. Denoting $\sigma_f$ the standard deviation of the tissue signal,

$$p(f) = \prod_{m,n} \frac{1}{\sigma_f \sqrt{2\pi}} e^{\frac{|f(m,n)|^2}{2\sigma_f^2}} .$$

(9)

The point spread function (PSF) is modelled as a white Gaussian signal (model noise) $v(m,n)$ filtered by a linear system with the frequency response equal to the initial estimate of the pulse spectrum $H_0(k,l)$, i.e. the frequency response of the distortion system. As will be described below, the initial point spread function (PSF) estimate is computed using the homomorphic filtering. The frequency response of the inverse system is $C(k,l)=1/H_0(k,l)$. Denoting its inverse Fourier transform $c(m,n)$, the probability density function of the point spread function (PSF) is then

$$p(h) = \prod_{m,n} \frac{1}{\sigma_h \sqrt{2\pi}} e^{\frac{|c(m,n) * h(m,n)|^2}{2\sigma_h^2}} ,$$

(10)

where $\sigma_h$ is the standard deviation of the model noise $v(m,n)$.

It is computationally convenient to transform the maximization in Equation (7) to the minimization of its logarithmic transform, multiplied by -1. This leads to

$$\tilde{f}, \tilde{h} = arg\{\min_{f,h}(\epsilon_{ML} + \epsilon_{PRf} + \epsilon_{PRh})\},$$

where

$$\epsilon_{ML} = \sum_{m,n} |g(m,n) - f(m,n) * h(m,n)|^2,$$

$$\epsilon_{PRf} = \frac{\sigma_w}{\sigma_f} \sum_{m,n} |f(m,n)|^2,$$

$$\epsilon_{PRh} = \frac{\sigma_w}{\sigma_h} \sum_{m,n} |c(m,n) * h(m,n)|^2. \tag{11}$$

$\epsilon_{ML}$ is the usually referred to as the maximum likelihood term, while $\epsilon_{prf}$ and $\epsilon_{prh}$ are referred to as the prior terms for the target function (or tissue function) and the point spread function (PSF), respectively. The described problem formulation is also known as the maximum a posteriori (MAP) solution (see J. L. Starck, E. Pantin, and F. Murtagh, Deconvolution in astronomy: a review, Publications of the Astronomical Society of the Pacific, vol. 114, no. 800, pp. 1051-1069, 2002).

While the maximum likelihood term represents the fidelity to the convolutional model, the prior terms can be seen as a regularization, which includes further a priori information on the process, namely the signal-to-noise ratios for the estimates of $f$ and $h$ and the assumed amplitude spectrum of $h$.

The criterial functional, i.e. the logarithmic transform of the maximum aposteriori function in Equation (11), is not convex because of the convolution in the maximum likelihood term. However, it is convex if either $f(m,n)$ or $h(m,n)$ is fixed. Then the optimum can be calculated in an iterative loop with alternating between the estimation of the target function (or tissue function) or the point spread function (PSF), with the other function fixed. A closed-form solution for each of the two optimization subproblems exists - the Wiener filter. The convergence to the global optimum is not guaranteed. However, the experiments show that the criterial functional decreases during the iterations, converging to a stable solution. The optimization is done by alternating between the following equations.

$$F_{i+1}(k,l) = \mathcal{P}_1\left[G(k,l) \cdot \frac{H_i^*(k,l)}{|H_i(k,l)|^2 + \frac{\sigma_w^2}{\sigma_f^2}}\right],$$

$$H_{i+1}(k,l) = \mathcal{P}_2\left[G(k,l) \cdot \frac{F_{i+1}^*(k,l)}{|F_{i+1}(k,l)|^2 + \frac{\sigma_w^2}{\sigma_h^2 |H_0(k,l)|^2}}\right]. \tag{12}$$

$F(k,l)$, $H(k,l)$ and $G(k,l)$ are the discrete Fourier transforms of $f(m,n)$, $h(m,n)$ and $g(m,n)$, respectively.

$i$ is the iteration number.

$P_1$, and $P_2$ are projection operators applied in each iteration to enforce additional constraints to the updated functions.

Further explanations on the notations have been provided above.

The following constraints are applied.

A known support region is assumed for the target function (or tissue function) and the point spread function (PSF). All values outside the support region are set to zero. The support region of the target function (or tissue function) is identical to the size of the input radiofrequency image data (radiofrequency (RF) image). The point spread function support region is estimated in every iteration. After updating of the point spread function (PSF), the amplitude of the new estimate is binarized based on entropy maximization (see J. N. Kapur, P. K. Sahoo, and A. K. C. Wong, A new method for gray-level picture thresholding using the entropy of the histogram, Comput. Vision Graphics Image Process., vol. 29, pp. 273-285, 1985.) Then it is followed by dilation. The resulting mask specifies the support region of the point spread function (PSF).

The point spread function (PSF) is assumed to have zero mean. This corresponds to the band pass character of ultrasound transducers. This is a reasonable assumption because the frequency characteristics of ultrasound transducers are zero for $f$ =0 Hz. Having zero-mean $h(m,n)$, the convolution $h(m,n)_*f(m,n)$ would lead to the same result for any mean value of $f(m,n)$. To limit the solution space, the zero mean is imposed also to the target function (or tissue function). This also fits the assumption of Equation (9).

From Equation (1), a skilled person would recognize that various multiplication factors included in $f(m,n)$ and $h(m,n)$ can lead to the same observed image $g(m,n)$. To limit the solution, the amplitude spectrum $|H(k,l)|$ of $h(m,n)$ is normalized. Hence, the convolution $f(m,n)*h(m,n)$ does not change the signal level of $f(m,n)$ in the frequency band around the maximum of $|H(m,n)|$, which corresponds to the center frequency of the emitted fundamental harmonic pulse. Finally, lateral symmetry is imposed on the point spread function (PSF) estimate.

The next constraint realizes suppression of speckles by averaging the envelopes of the fundamental and second harmonic images, similarly to T. Taxt and R. Jirik, Superresolution of ultrasound images using the 1st and 2nd harmonic signal, IEEE Trans. Ultrason. Ferroelec. Freq. Cont., vol. 51, no. 2, pp. 163-175, 2004. In each iteration, the constraint is imposed as follows.

First, the current target function (or tissue function) estimate is filtered using complementary low-pass and highpass filters to decompose it to the fundamental and second harmonics. Then, the harmonic radiofrequency image data are converted to analytical (quadrature) signals using the Hilbert transform (see A. V. Oppenheim and R. W. Schafer, Discrete Time Signal Processing, Prentice Hall, 1989). The envelopes of the harmonic signals are computed by scaling the second harmonic image envelope so that it has the same total integral value (i.e. summing the amplitude or envelope values of all pixels) as the first harmonic image envelope. Then, the arithmetic mean (x1+x2)/2 of the first harmonic image envelope and of the second harmonic image envelope is computed. This weighted envelope (having the integral value of the envelope of the initial broadband image) is then combined independently with the phase of the first and second harmonic images, respectively. Complex addition of the weighted first harmonic image and second harmonic image then gives the constrained image.

The resulting quadrature signals are transformed back to real-valued radiofrequency signals (by extracting the real part) (see A. V. Oppenheim and R. W. Schafer, Discrete Time Signal Processing, Prentice Hall, 1989) and summed to give an estimate of the broadband target function (or tissue function) (containing both harmonics).

In other words, as a skilled person would understand that, in order to construct the radiofrequency (RF) image of the target from the averaged envelopes, the envelope is combined with the phase images of the harmonic components, the result of the combination is transformed to the real-valued signal and the resulting harmonic components are summed.

This approach imposes the same envelope on the two harmonic components. It is valid for specular reflections from interfaces between tissue structures. For speckle regions, the envelopes of the two harmonics are different and the averaging suppresses the speckle pattern.

The correlation and convolution operations are realized in the Fourier domain. Thus, the target image (or tissue image) and the point spread function (PSF) are zero-padded to avoid the wrap-around effect. To assure that the linear convolution is used (instead of the circular convolution), the two components have to be zero-padded to at least twice the size of the images minus one in each direction (A. V. Oppenheim and R. W. Schafer, Discrete Time Signal Processing, Prentice Hall, 1989).

The constants $\sigma_w$ and $\sigma_f$ in Equation (12) are estimated directly from the power spectrum of the input image data. The mean value within the region of the highest energy is the signal power estimate, while the noise power estimate is the mean value in the outer frequency bands.

As one of the point spread function (PSF) constraints given above is the normalization of $|H(k,l)|$, it is advantageous that also $|H_0(k,l)|$ in Equation (12) is normalized. Then, the energy level of $F(k,l)$ and $G(k,l)$ in the frequency band close to the maximum of $|H_0(k,l)|$ is approximately equal. Hence, the energy of the model noise $v(m,n)$ in this frequency band is unity. As the model noise is assumed to be white, it is reasonable to assume $\sigma_h^2 = 1$.

In blind iterative deconvolution techniques, it is advantageous that the initial estimate of the target function (or tissue function) and the point spread function (PSF) lie as close to the true values as possible. This increases the probability that the optimization converges to the global minimum instead of a local one. Here, a problem is the initial estimation of the point spread function (PSF).

The initial target function (or tissue function) estimate is not needed because the target function (or tissue function) is updated first in the iterative deconvolution, based on the initial point spread function estimate (see Equation (12)).

The initial estimation of the point spread function (PSF) is computed using homomorphic filtering. The basic idea is to estimate the point spread function (PSF) from the complex-cepstrum-domain representation of the input radiofrequency image data.

The homomorphic deconvolution is applied to three consecutive frames, i.e. three frames of radiofrequency image data acquired at three consecutive time instants (in another embodiment, the homomorphic deconvolution is applied to two consecutive frames, and, in yet another embodiment, to more than three consecutive frames). The point spread function (PSF) is estimated using homomorphic deconvolution from each frame separately. Then, their mean in the spatial domain forms the initial point spread function (PSF) estimate. This makes the estimation process substantially more reliable than processing of only one frame.

The approach is valid if the imaged tissue and the transducer position do not change abruptly during the recording of the three frames (or, in the other above-mentioned embodiments, during the recording of the respective number of consecutive frames). Slow changes in the image are not so crucial because the consecutive frames are used only for the point spread function (PSF) estimation. Estimation of the target function (or tissue function) is done only in the iterative deconvolution based on one image frame. The assumption of no abrupt changes within three consecutive frames is a reasonable assumption as the frame rates of the current scanners are fairly high (around 50 frames per second).

The homomorphic transform of the input image (i.e. mapping to the complex cepstrum domain) is divided into homomorphic transform of the amplitude and phase of the input image spectrum. These two components correspond to the real and imaginary parts of the image log-spectrum.

The log-spectrum $\hat{G}_A(k,l)$ of the amplitude component is obtained as

$$\hat{G}_A(k,l) = \ln\left|DFT\{g(m,n)\}\right|, \qquad (13)$$

where *DFT* denotes the forward two-dimensional (2-D) discrete Fourier transform.

To reduce time aliasing, typical for the homomorphic filtering (see A. V. Oppenheim and R. W. Schafer, Discrete Time Signal Processing, Prentice Hall, 1989), the input image $g(m,n)$ is zero-padded prior to the homomorphic mapping. Computing the logarithm of values close to zero is avoided by removing frequency bands with no useful signal (as described above) and by adding a small value (here about $10^{12}$ times smaller than the amplitude image values) to the amplitude spectrum before the logarithmic transform.

In the homomorphic mapping of the phase component, the two-dimensional (2-D) phase unwrapping is avoided by assuming a separable point spread function (PSF). It is a simplifying assumption but it is relaxed in the iterative deconvolution. Then, the task is decomposed to one-dimensional (1-D) homomorphic transforms in the axial and lateral directions. As shown in T. Taxt, Comparison of cepstrum based methods for radial blind deconvolution of ultrasound images, IEEE Trans. Ultrason. Ferroelec. Freq. Cont., vol. 44, no. 3, pp. 666-674, 1997, the most reliable one-dimensional (1-D) method of homomorphic transform is based on polynomial rooting (see A. V. Oppenheim and R. W. Schafer, Discrete Time Signal Processing, Prentice Hall, 1989). Thus, the approach was chosen here too.

The homomorphic transform of the spectrum phase will be explained for the axial direction. The point spread function (PSF) is most reliably estimated from segments with high envelope values, corresponding to locations of strong scatterers or reflectors. Hence, all A-scans of the subimage are divided to short segments in the axial direction, corresponding to various depths within the subimage. From each depth, one segment is selected which has the highest envelope value. Then the segments are mapped to the complex cepstrum domain using polynomial rooting. The resulting cepstra are merged to the resulting axial cepstrum $\hat{g}_{ax}(m)$ by median-filtering, i.e. each sample of $\hat{g}_{ax}(m)$ is a median of the corresponding samples in the segment cepstra (mean of the complex cepstra is another alternative). To extract the log-spectrum corresponding only to the phase spectrum of the input image, the following transform is done:

$$\hat{G}_{P,ax}(k) = \text{Im}\left[DFT\{\hat{g}_{ax}(m)\}\right], \qquad (14)$$

where Im is the imaginary part. To obtain the lateral log-spectrum of the phase component $G_{P,lat}(l)$, the same procedure is applied to the transposed image matrix.

The amplitude and phase components of the log-spectrum are then combined together and transformed to the complex cepstrum domain:

$$\hat{g}(m,n) = DFT^{-1}\left\{\hat{G}_A(k,l) + i\left[\hat{G}_{P,ax}(k) + \hat{G}_{P,lat}(l)\right]\right\} \qquad (15)$$

The complex cepstrum of the initial two-dimensional (2-D) point spread function (PSF) is calculated by two-dimensional (2-D) Butterworth filtering of the input image data in the complex-cepstrum domain. The initial estimate of the point spread function (PSF) is obtained by inverse homomorphic transform.

The deconvolution method was tested on image sequences recorded from a tissue-mimicking phantom Gammex 403GS (manufactured by Gammex RMI, Middleton, Wisconsin, United States) and on clinical images. All image sequences were recorded using GE Vingmed Ultrasound System 5 scanner (manufactured by GE Vingmed Ultrasound, Horten, Norway) in the broadband imaging mode, recording both the first and second harmonic signals. The raw radiofrequency image data were recorded by the scanner as quadrature demodulated signals (analytic signals demodulated so that the zero frequency is located between the fundamental and the second harmonic). These data were modulated and transformed to the real-valued frequency image data format (as described above).

The clinical images were recorded using the curved linear array probe CLA 192 3.5 (manufactured by Sound Technologies, Inc., State College, Pennsylvania, United States) with the following parameters:

- center frequency of the emitted first harmonic ultrasound pulse: 2.0 MHz,
- demodulation frequency of the recorded quadrature signal: 3.0 MHz,
- sampling frequency after quadrature demodulation: 4.0 MHz.

Four sequences were recorded from volunteers, each consisting of 10 images (frames). The imaged structures were aorta, pancreas, bladder and kidney.

The phantom images were recorded using the phased array probe FPA 64 2.5C (manufactured by Sound Technologies, Inc., State College, Pennsylvania, United States) with the following parameters:

- center frequency of the emitted first harmonic ultrasound pulse: 1.7 MHz,
- demodulation frequency of the recorded quadrature signal: 2.5 MHz,
- sampling frequency after quadrature demodulation: 3.3 MHz.

The image set consisted of 10 frames, recorded using various power levels of the emitted signal. The images showed a region covering point targets (nylon wires perpendicular to the tomographic plane). Altogether 17 point targets were evaluated.

In the initial estimates of the point spread function (PSF) and the target function (or tissue function), the following parameters were used. The Butterworth filter used in the cepstrum-domain low-pass liftering was of order 5 and the axial and lateral locus values were 4 and 2 pixels, respectively. The approximate values were determined from the log-spectrum of the recorded radiofrequency signals as described in J.A. Jensen, Estimation of in vivo pulses in medical ultrasound, Ultrasonic Imaging, vol. 16, no. 3, pp. 190-203, 1994 and then further experimentally adjusted to give the best results.

The number of iterations used in the iterative deconvolution was 3. With further iterations, the improvement of the spatial resolution became less visible.

An exact evaluation of the deconvolution performance is possible if the true image is known. This was the case of data recorded from the phantom. The resolution was evaluated, from the polar-coordinate representation envelope images of nylon wires located perpendicularly to the tomographic plane of the image. An image of such point targets gives an estimate of the two-dimensional (2-D) point spread function (PSF) at the current position (distorted by surrounding diffuse scatterers). For each point target, a small image area was selected covering the complete point spread function (PSF). Then, the corresponding envelope subimage was normalized and the size of the point spread function (PSF) was measured as the area under the pixels with values higher than 0.5.

For clinical recordings, the true images are not known, thus, there is no exact quantitative method to evaluate the resolution improvement of the deconvolved images. However, visual evaluation is possible for image areas showing structures with well defined borders, e.g. vessels. The sharpness and continuity of the borders is a good measure of the spatial resolution. Furthermore, higher spatial resolution is also indicated by finer speckle pattern, as the spatial correlation of speckles increases with the extent of the point spread function.

Quantitatively, the spatial resolution of clinical ultrasound images was estimated using the autocorrelation measure. First, the two-dimensional (2-D) autocorrelation was computed from the envelope of the polar coordinate image representation. The number of pixels of the normalized autocorrelation function with value higher than 0.75 (corresponding to a 2.5 dB reduction) was counted. The ratio between these numbers for the reference image and the deconvolved (or second harmonic) image was taken as the numeric measure of the resolution gain. The reference image was the fundamental harmonic input image.

To evaluate the effect of the deconvolution on the noise level, the spatial signal-to-noise ratio was estimated. In image processing applications, the noise power $S_{ww}$, is estimated as the average of squared pixel values within a region containing only noise. The average of squared pixel values within the complete image, $S_{gg}$, estimates the sum of the noise power $S_{ww}$, and the signal power $S_{ff}$. The spatial signal-to-noise ratio is then estimated as $\dfrac{S_{gg} - S_{ww}}{S_{ww}}$ .

For ultrasonic images, the homogeneous regions would correspond to regions with no reflectors and scatterers. Such regions do not exist in real tissues. Image regions of low echogeneity (blood areas, kidney cortex) were chosen here as the closest approximation of such regions. The computations were done on the radiofrequency data representation.

To evaluate the gray-scale stability of the deconvolution through an image sequence, the temporal signal-to-noise ratio was estimated. For each image sequence, a homogeneous region was chosen and the mean value of its envelope representation was calculated for each image in the sequence. Then, the temporal signal-to-noise ratio was obtained as the mean of the mean values through the image sequence divided by their standard deviation.

The results are now described when using phantom images.

The data sets were first processed using a deconvolution method published in R. Jiřík and T. Taxt, *High-resolution ultrasonic imaging using fast two-dimensional homomorphic filtering*, IEEE Trans. Ultrason. Ferroelec. Freq. Cont., vol. 53, no. 8, pp. 1440-1448, 2006. It is a non-iterative global two-dimensional (2-D) homomorphic deconvolution with the assumption of symmetric point spread function (PSF). The same Wiener filtering of the target function (or tissue function) is used as in the iterative deconvolution to make the methods comparable. This method is herewith referred to as a reference deconvolution.

The initial estimates given by homomorphic deconvolution were compared with the results of the iterative deconvolution to show the effect of the iterative approach. Table I shows a substantial decrease of the point spread function (PSF) size, confirming the improvement of the spatial resolution, due to the iterative deconvolution.

Furthermore, the comparison of the iterative method with the reference deconvolution shows the superiority of the iterative method.

TABLE I

POINT SPREAD FUNCTION SIZE OF PHANTOM IMAGES (IN MM × RAD, MEAN $\pm$ STD.DEV.)

| input 1st harmonic | input 2nd harmonic | reference deconvolution | initial estimate | iterative deconvolution |
|---|---|---|---|---|
| $0.83 \pm 0.17$ | $0.32 \pm 0.09$ | $0.45 \pm 0.19$ | $0.49 \pm 0.22$ | $0.28 \pm 0.16$ |

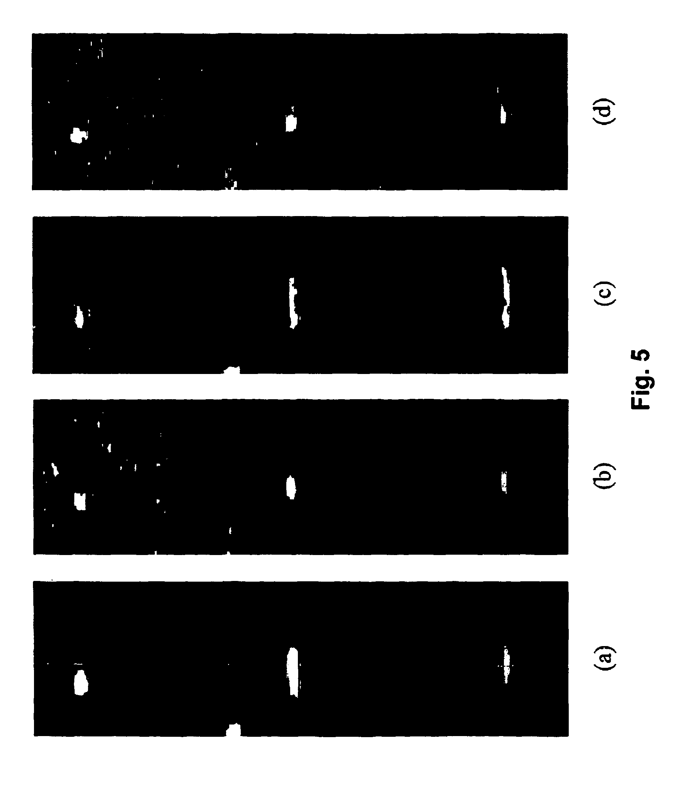

An example of phantom point targets is shown in Fig. 5. The largest point targets (lowest spatial resolution) correspond to the input fundamental-harmonic images (Fig. 5 (a)). A slight improvement follows using the reference deconvolution (Fig. 5(c)). The highest spatial resolution can be observed for the second-harmonic (Fig. 5(b)) and the result of the iterative deconvolution (Fig. 5(d)).

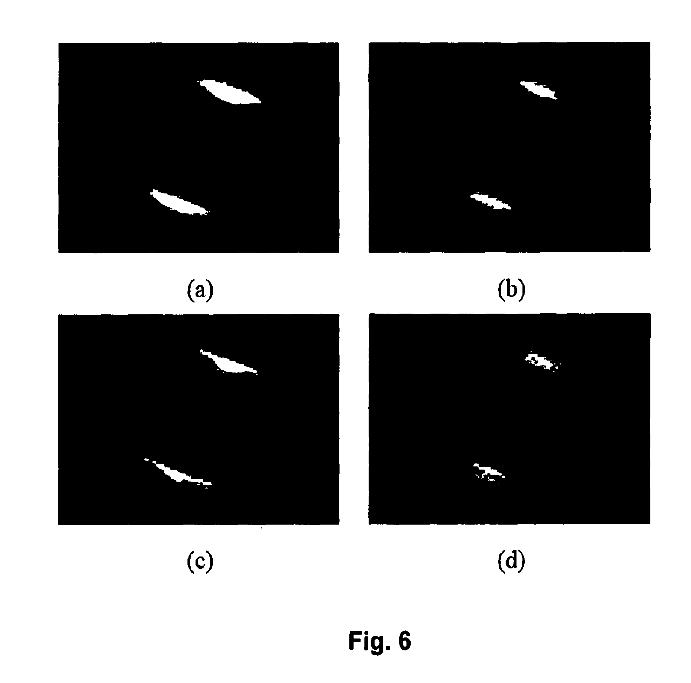

Fig. 6 shows a spherical structure (mimicking a cyst) of the phantom. It clearly shows that the expected spherical shape has been restored using the iterative deconvolution (Fig. 6(d)), while it was not well defined in the input fundamental- (Fig. 6(a)) and second-harmonic (Fig. 6(b)) images, nor in the reference deconvolution (Fig. 6(c)).

The results are now described when using clinical images.

The effect of deconvolution was higher for clinical images than for the point-target phantom images. The reason for this difference is probably that the clinical images contained more reflective structures, i.e. more specular reflectors, compared to the phantom which consisted mainly of diffuse scatterers. Furthermore, the clinical images are more degraded because of the pulse distortion in the tissue (mainly due to phase aberrations in the body wall). Hence the effect of the deconvolution is more visible.

The resolution gain estimates are summarized in Table II. The best resolution was obtained using the iterative deconvolution. The resolution gains of the reference deconvolution and the initial estimation were in the same range.

TABLE II

RESOLUTION GAINS OF CLINICAL IMAGES (MEAN $\pm$ STD.DEV.)

| Image sequence | 2nd harmonic | reference deconvolution | initial estimate | iterative deconvolution |
|---|---|---|---|---|
| pancras | $1.3 \pm 0.0$ | $4.5 \pm 0.2$ | $4.2 \pm 0.4$ | $6.7 \pm 0.4$ |
| kidney | $1.4 \pm 0.0$ | $4.4 \pm 0.1$ | $4.5 \pm 0.3$ | $6.3 \pm 0.3$ |
| aorta | $1.0 \pm 0.0$ | $5.6 \pm 0.1$ | $5.9 \pm 0.1$ | $8.4 \pm 0.1$ |
| bladder | $1.2 \pm 0.0$ | $2.8 \pm 0.2$ | $2.4 \pm 0.3$ | $5.3 \pm 0.4$ |

The lowest resolution gain was measured on the bladder sequence. In general, images with large regions of low echogeneity (like the bladder images) give worse results than images with many structures. This is because the echogenic structures are the source of information for the blind deconvolution.

Table II also shows a certain resolution gain obtained by imaging only the second harmonic. This is according to theory because the spatial extent of the second harmonic pulse is smaller than the fundamental harmonic pulse. The resolution gain of the second harmonic images is, however, much lower than the gain achieved with deconvolution.

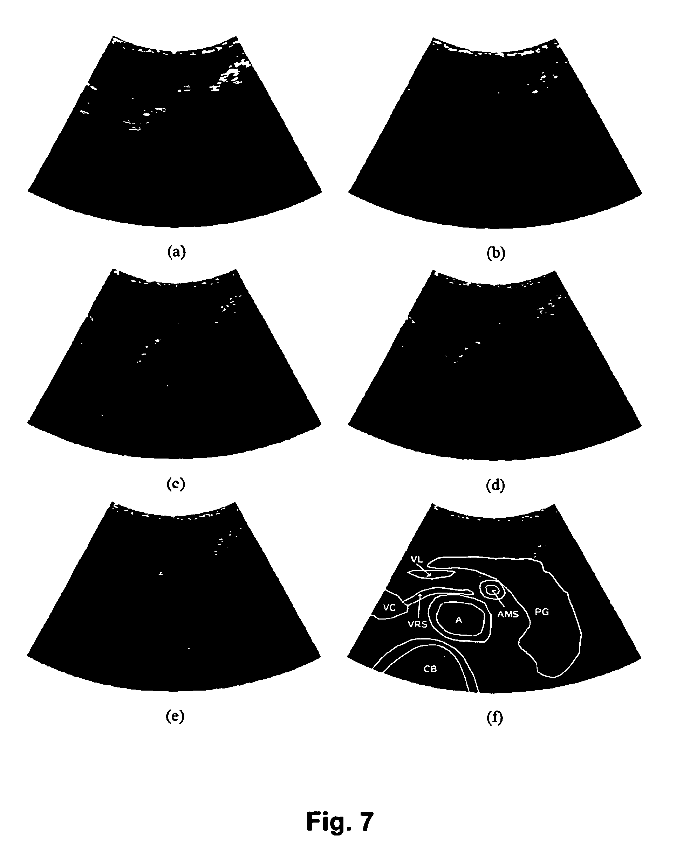

Examples of the clinical images are given in Fig. 7 to 11. The resolution improvement of the deconvolved images was observed visually as sharper tissue structure borders.

In Fig. 7, the inner and outer delineation of aorta ("A") and arteria mesenterica superior ("AMS") became visible after deconvolution (Fig. 7(e)), while it was vaguely defined in the input image (Fig. 7(a), (b)). Also the curved shape of the vertebral body can be followed after deconvolution. The pancreatic gland ("PG") has the same speckle pattern as the neighboring tissue in the input images and is therefore practically invisible. After deconvolution, the delineation and a certain difference in the speckle pattern becomes visible.

Similar features can be observed in other tissue structures. The outline of the bladder (Fig. 9) can be followed more precisely, as well as the aorta ("A") border in Fig. 8 and the kidney capsule delineation (Fig. 10).

In addition, the speckle pattern of the deconvolved images was more distinct with much shorter spatial correlation. The visual evaluation of the spatial resolution was in correspondence with the autocorrelation measure in table (Table II). The reference deconvolution gave moderate improvement of the spatial resolution while clearly higher resolution improvement was achieved using the iterative deconvolution.

As the second harmonic signal is more attenuated than the fundamental harmonic, deeper structures are not well visible in the second harmonic images (see for example Fig. 7(b)). These structures are however well visible in the deconvolved images. This illustrates that the proposed deconvolution approach exploits harmonic imaging without loosing deep structures.

The estimates of the spatial signal-to-noise ratio (Table III) indicate a slight decrease for deconvolved images. This is a usual side effect of deconvolution. Also the second harmonic images had lower spatial signal-to-noise ratios than the first harmonic images. This is as expected because the level of the second harmonic signal is generally smaller.

TABLE III

SPATIAL SIGNAL-TO-NOISE RATIOS (IN DECIBELS, MEAN $\pm$ STD.DEV.)

| Image sequence | input 1st harmonic | input 2nd harmonic | reference deconvolution | initial estimation | iterative deconvolution |
|---|---|---|---|---|---|
| pancras | $38.4 \pm 0.7$ | $36.2 \pm 3.6$ | $34.8 \pm 1.9$ | $31.9 \pm 1.5$ | $32.8 \pm 2.0$ |
| kidney | $14.9 \pm 0.6$ | $11.2 \pm 1.9$ | $12.2 \pm 1.9$ | $12.9 \pm 1.5$ | $12.3 \pm 1.5$ |
| aorta | $20.8 \pm 0.2$ | $28.5 \pm 0.3$ | $17.3 \pm 0.2$ | $17.3 \pm 0.2$ | $20.3 \pm 0.1$ |
| bladder | $30.2 \pm 0.1$ | $27.6 \pm 0.1$ | $26.5 \pm 0.1$ | $25.7 \pm 0.6$ | $25.8 \pm 0.3$ |

As for the temporal signal-to-noise ratio (Table IV), taking the variability into account, the estimates remain in the same range, meaning approximately constant gray-level stability through the sequences.

TABLE IV

TEMPORAL SIGNAL-TO-NOISE RATIOS (IN DECIBELS)

| Image sequence | input 1st harmonic | input 2nd harmonic | reference deconvolution | initial estimation | iterative deconvolution |
|---|---|---|---|---|---|
| pancras | 29.2 | 30.9 | 42.9 | 40.5 | 43.2 |
| kidney | 25.7 | 27.9 | 28.9 | 31.1 | 29.7 |
| aorta | 23.8 | 29.6 | 34.6 | 36.8 | 28.9 |
| bladder | 32.2 | 38.8 | 35.5 | 32.1 | 29.0 |

The testing results indicate that the method of the invention may help clinicians to identify tissue interfaces more reliably and even see structures that are hardly visible or not visible in the unprocessed images.

In the method, it is convenient to model the target function (or tissue function) as a white Gaussian signal. This leads to Wiener deconvolution. However, in one embodiment, for instance if the computational complexity is not a critical issue, a more realistic model is used. Laplacian distribution of the target function (or tissue function), proposed in O. Michailovich and D. Adam, A novel approach to the 2-D blind deconvolution problem in medical ultrasound, IEEE Trans. Med. Imag., vol. 24, no. 1, pp. 86-104, 2005, enables better recovery of strong reflectors. In one embodiment, the following model is used. A target function (or tissue function) model is uncorrelated identically distributed random variables weighted by a piecewise-smooth echogenicity map (see J. Ng, R. Prager, N. Kingsbury, G. Treece, and A. Gee, Wavelet restoration of medical pulse-echo ultrasound images in an EM framework, IEEE Trans. Ultrason. Ferroelec. Freq. Cont., vol. 54, no. 3, pp. 550-568, 2007).

In one embodiment, the constraints of the deconvolution method are imposed in every iteration as a projection operator. The advantage of this straightforward approach is the simple implementation. On the other hand, the convergence of the iterative deconvolution is not guaranteed. Another embodiment provides for the implementation of the constraints as a part of the optimized function, as suggested for example in E. Thibaut and J.-M. Conan, Strict a priori constraints for maximum-likelihood blind deconvolution, J. Opt. Soc. Am. A, vol. 12, no. 3, pp. 458-491, 1995.

In one embodiment of the method, one of the constraints used is based on averaging of envelopes of the fundamental and second harmonic components. In another embodiment, the method is applied to image data containing also higher harmonics. Then, the averaging operation may be replaced by weighted averaging with the weights corresponding to the attenuation and generation of the harmonics.

The method described for processing two-dimensional (2D) ultrasound data may be adapted by a skilled person for application to three-dimensional (3D) ultrasound data. In the convolutional distortion model, g, f, h are the functions of three coordinate indices. The additional coordinate corresponds to the elevation direction (perpendicular to the axial and lateral directions). In the initial point spread function (PSF) estimation, the 1D homomorphic filtering has to be done not only in the axial and lateral directions but also in the elevation direction. In the iterative blind deconvolution, Equation (12) above does not require to be changed: only G, F, H will be functions of three frequency indices.

Where the term "unit" is used herewith (for instance in "image processing unit", "global deconvolution unit", "local deconvolution unit", "dividing unit", "iterative unit" and "merging unit"), no restriction is made regarding how distributed the constituent elements of a unit may be and regarding how gathered units may be. That is, the constituent elements of a unit may be distributed in different software or hardware components or devices for bringing about the intended function. A plurality of distinct units may also be gathered for providing the intended functionalities.

Although the present invention has been described on the basis of detailed examples, the detailed examples only serve to provide the skilled person with a better understanding, and are not intended to limit the scope of the invention. The scope of the invention is much rather defined by the appended claims.

## Claims

1. Image processing method applied on an image of a target or on a segment of an image of a target, the target being an imaged medium probed by acoustic or ultrasound waves, the method including
a deconvolution procedure (S1) including a blind deconvolution of the whole image, or of the whole segment respectively, to estimate a point spread function characterizing the imaging process and a target function characterizing the distribution of reflectors and scatterers in the target;
wherein the blind deconvolution is an iterative blind deconvolution wherein the target function and the point spread function are estimated and updated by alternating (S12, S14) between the following equations:

$$F_{i+1}(k,l) = \mathcal{P}_1\left[G(k,l) \cdot \frac{H_i^*(k,l)}{|H_i(k,l)|^2 + \frac{\sigma_w^2}{\sigma_f^2}}\right],$$

$$H_{i+1}(k,l) = \mathcal{P}_2\left[G(k,l) \cdot \frac{F_{i+1}^*(k,l)}{|F_{i+1}(k,l)|^2 + \frac{\sigma_w^2}{\sigma_h^2 |H_0(k,l)|^2}}\right]$$

or between the following equations:

$$H_{i+1}(k,l) = \mathcal{P}_1\left[G(k,l) \cdot \frac{F_i^*(k,l)}{|F_i(k,l)|^2 + \frac{\sigma_w^2}{\sigma_h^2 |H_0(k,l)|^2}}\right],$$

$$F_{i+1}(k,l) = \mathcal{P}_2\left[G(k,l) \cdot \frac{H^*_{i+1}(k,l)}{|H_{i+1}(k,l)|^2 + \frac{\sigma_w^2}{\sigma_f^2}}\right]$$

wherein

$F(k,l)$, $H(k,l)$ and $G(k,l)$ are respectively the discrete Fourier transforms of $f(m,n)$, the estimated target function, $h(m,n)$, the estimated point spread function, and $g(m,n)$, data representing the image, or the segment respectively,

$m$, $n$ are the spatial-domain indices corresponding respectively to an axial and a lateral directions, with the axial direction being the direction along a pulse propagation of the acoustic or ultrasound waves and the lateral direction being perpendicular to the axial direction,

$i$ is the iteration number,

$P_1$ and $P_2$ are projection operators applied in each iteration to enforce constraints to the estimated functions,

$\sigma_f$, $\sigma_h$ and $\sigma_\omega$ are respectively the standard deviation of the target function, the point spread function and the noise; and

the superscript * denotes complex conjugation; and

wherein at least one of the following constraints is enforced:

i) a known support region is supposed for the target function and all values outside the support region are set to zero;

ii) a known support region identical to the size of the image data is supposed for the target function and all values outside the support region are set to zero;

iii) a known support region is supposed for the point spread function and all values outside the support region are set to zero;

iv) after estimation of the support region of the point spread function and the update thereof, the amplitude of the new estimate is binarized based on entropy maximization, dilatation is performed and the resulting mask specifies the support region of the point spread function;

v) the point spread function is assumed to have zero mean;

vi) the target function is assumed to have zero mean; and

vii) the envelopes of at least the fundamental and second harmonic components of the image of the target, or the segment thereof respectively, are averaged.

2. Method of claim 1, wherein the constraints i) to vii) are all enforced.

3. Method of claim 1 or 2, wherein the blind deconvolution used to obtain the initial estimation of the point spread function and the target function for the iteration is a blind homomorphic deconvolution.

4. Method of claim 3, wherein the blind homomorphic deconvolution used to obtain the initial estimation of the point spread function includes
a homomorphic deconvolution on each of at least two consecutive frames, and preferably on each of three consecutive frames, wherein consecutive frames are image or segment versions acquired at consecutive times, and averaging the at least two estimated point spread functions, and respectively preferably the three estimated point spread functions, to obtain the initial estimation.

5. Method according to any one of the preceding claims, wherein the number of iterations of the iterative blind deconvolution of the deconvolution procedure (S1) is larger than 2, and preferably is 3.

6. Method according to any one of the preceding claims, wherein the iterative blind deconvolution of the deconvolution procedure (S1) is based on a Bayesian approach, i.e. based on an estimation of the point spread function and target function by searching for the most probable point spread function and target function given the whole image, or whole segment respectively.

7. Image processing method applied on an image of a target, the target being an imaged medium probed by acoustic or ultrasound waves, the method including
a local deconvolution procedure (S4) including
a division (S42) of the image into image segments,
an iterative blind deconvolution (S44) of each segment separately, including the method according to any one of claims 1 to 6 applied on each segment, to estimate a local point spread function and a local target function, and an estimation (S46) of the target function for the whole image based on the local target functions.

8. Method of claim 7, wherein dividing (S42) the image data into image segments is made only in the axial direction, only in the lateral direction or both in the axial and lateral directions.

9. Image processing method applied on an image of a target, the target being a probed, imaged medium, the method including
a global deconvolution procedure (S2) including the method according to any one of claims 1 to 6 applied on the whole image, to estimate a point spread function characterizing the imaging process and a target function characterizing the distribution of reflectors and scatterers in the target; and
a local deconvolution procedure (S4) including
a division (S42) of the image into image segments,
an iterative blind deconvolution (S44) of each segment separately, including the method according to claim 1 or 2, to estimate a local point spread function and a local target function, wherein an initial estimate in the iterative blind deconvolution (S44) is based on an output of the global deconvolution procedure (S2), and
an estimation (S46) of the target function for the whole image based on the local target functions.

10. Method of claim 9, wherein dividing (S42) the image data into image segments is made only in the axial direction, only in the lateral direction or both in the axial and lateral directions.

11. Method of claim 9 or 10, wherein an initial estimate in the iterative blind deconvolution (S44) of the local deconvolution procedure (S4) is based on an output of the global deconvolution procedure (S2), by using either the point spread function estimated by a global deconvolution procedure (S2) or the target function estimated by the global deconvolution procedure (S2).

12. Image processing unit (10) for processing an image of a target or a segment of an image of a target, the target being an imaged medium probed by acoustic or ultrasound waves,
the unit (10) being configured for carrying out a blind deconvolution of the whole image, or of the whole segment respectively, to estimate a point spread function characterizing the imaging process and a target function characterizing the distribution of reflectors and scatterers in the target;
wherein said blind deconvolution is an iterative blind deconvolution wherein the target function and the point spread function are estimated and updated by alternating between the following equations:

$$F_{i+1}(k,l) = \mathcal{P}_1\Big[G(k,l) \cdot \frac{H_i^*(k,l)}{|H_i(k,l)|^2 + \frac{\sigma_w^2}{\sigma_f^2}}\Big],$$

$$H_{i+1}(k,l) = \mathcal{P}_2\Big[G(k,l) \cdot \frac{F_{i+1}^*(k,l)}{|F_{i+1}(k,l)|^2 + \frac{\sigma_w^2}{\sigma_h^2|H_0(k,l)|^2}}\Big]$$

or between the following equations:

$$H_{i+1}(k,l) = \mathcal{P}_1\Big[G(k,l) \cdot \frac{F_i^*(k,l)}{|F_i(k,l)|^2 + \frac{\sigma_w^2}{\sigma_h^2|H_0(k,l)|^2}}\Big],$$

$$F_{i+1}(k,l) = \mathcal{P}_2\Big[G(k,l) \cdot \frac{H_{i+1}^*(k,l)}{|H_{i+1}(k,l)|^2 + \frac{\sigma_w^2}{\sigma_f^2}}\Big]$$

wherein

$F(k,l)$, $H(k,l)$ and $G(k,l)$ are respectively the discrete Fourier transforms of $f(m,n)$, the estimated target function, $h(m,n)$, the estimated point spread function, and $g(m,n)$, data representing the image, or the segment respectively,

$m$, $n$ are the spatial-domain indices corresponding respectively to an axial and a lateral directions, with the axial direction being the direction along a pulse propagation of the acoustic or ultrasound waves and the lateral direction being perpendicular to the axial direction,

$i$ is the iteration number,

$P_1$ and $P_2$ are projection operators applied in each iteration to enforce constraints to the estimated functions,

$\sigma_f$, $\sigma_f$, and $\sigma_\omega$, are respectively the standard deviation of the target function, the point spread function and the noise; and

the superscript * denotes complex conjugation; and

wherein at least one of the following constraints is enforced:

i) a known support region is supposed for the target function and all values outside the support region are set to zero;

ii) a known support region identical to the size of the image data is supposed for the target function and all values outside the support region are set to zero;

iii) a known support region is supposed for the point spread function and all values outside the support region are set to zero;

iv) after estimation of the support region of the point spread function and the update thereof, the amplitude of the new estimate is binarized based on entropy maximization, dilatation is performed and the resulting mask specifies the support region of the point spread function;

v) the point spread function is assumed to have zero mean;

vi) the target function is assumed to have zero mean; and

vii) the envelopes of at least the fundamental and second harmonic components of the image of the target, or the segment thereof respectively, are averaged.

13. Image processing unit (10) of claim 12, configured so that the constraints i) to vii) are all enforced.

14. Image processing unit (10) of claim 12 or 13, configured so that the blind deconvolution used to obtain the initial estimation of the point spread function and the target function for the iteration is a blind homomorphic deconvolution.

15. Image processing unit (10) of claim 14, configured so that the blind homomorphic deconvolution used to obtain the initial estimation of the point spread function includes

a homomorphic deconvolution on each of at least two consecutive frames, and preferably on each of three consecutive frames, wherein consecutive frames are image or segment versions acquired at consecutive times, and averaging the at least two estimated point spread functions, and respectively preferably the three estimated point spread functions, to obtain the initial estimation.

16. Image processing unit (10) according to any one of claims 12 to 15, configured so that the number of iterations of the iterative blind deconvolution carried out by the unit (10) is larger than 2, and preferably is 3.

17. Image processing unit (10) according to any one of claims 12 to 16, configured so that the iterative blind deconvolution carried out by the unit (10) is based on a Bayesian approach, based on an estimation of the point spread function and target function by searching for the most probable point spread function and target function given the whole image, or whole segment respectively.

18. Image processing apparatus (1) configured to process an image of a target, the target being a probed, imaged medium, the apparatus including

a local deconvolution unit (4) including an image processing unit (10) according to any one of claims 12 to 17, the local deconvolution unit (4) being configured for

dividing (S42) the image into image segments,

carrying out an iterative blind deconvolution (S44) of each segment separately, by causing its image processing unit (10) to carry out the blind deconvolution of each segment, to estimate the respective local point spread function and respective local target function, and

an estimation (S46) of the target function for the whole image based on the local target functions.

19. Image processing apparatus (1) of claim 18, configured so that dividing (S42) the image data into image segments is made only in the axial direction, only in the lateral direction or both in the axial and lateral directions.

**20.** Image processing apparatus (1) configured to process an image of a target, the target being an imaged medium probed by acoustic or ultrasound waves, the apparatus including
a global deconvolution unit (2) including an image processing unit (10) according to any one of claims 12 to 17, the global deconvolution unit (2) being configured to cause its image processing unit (10) to carry out the blind deconvolution on the whole image, to estimate a point spread function characterizing the imaging process and a target function characterizing the distribution of reflectors and scatterers in the target; and
a local deconvolution unit (4) including a further image processing unit (10') according to claim 12 or 13, the local deconvolution unit (4) being configured for
dividing (S42) of the image into image segments,
carrying out an iterative blind deconvolution (S44) of each segment separately, by causing its image processing unit (10') to carry out the blind deconvolution of each segment, to estimate the respective local point spread function and respective local target function, wherein an initial estimate in the iterative blind deconvolution (S44) is based on an output of the global deconvolution unit (2), and
estimating (S46) a target function for the whole image based on the local target functions.

**21.** Apparatus (1) of claim 20, configured so that dividing (S42) the image data into image segments is made only in the axial direction, only in the lateral direction or both in the axial and lateral directions.

**22.** Apparatus (1) of claim 20 or 21, configured so that an initial estimate in the iterative blind deconvolution (S44) carried out by the local deconvolution unit (4) is based on an output of the global deconvolution unit (2), by using either the point spread function estimated by a global deconvolution unit (2) or the target function estimated by the global deconvolution unit (2).

**23.** Computer program configured to cause, when executed on a computer, any one of the methods of claims 1 to 11 to be carried out.

**24.** Scanner for obtaining an image of a target, the target being a probed, imaged medium, the scanner comprising an image processing unit (10) according to any one of claims 12 to 17 or comprising an image processing apparatus (1) according to any one of claims 18 to 22.

**Patentansprüche**

**1.** Bildverarbeitungsverfahren, das auf ein Bild eines Ziels oder ein Segment eines Bildes eines Ziels angewendet wird, wobei das Ziel ein abgebildetes Medium ist, das durch akustische oder Ultraschall-Wellen untersucht wird, wobei das Verfahren beinhaltet
eine Entfaltungsprozedur (S1), die eine Blindentfaltung des gesamten Bildes bzw. des gesamten Segments beinhaltet, um eine Punktspreizfunktion, die den Bildverarbeitungsprozess charakterisiert, und eine Zielfunktion, die die Verteilung von Reflektoren und Streuern in dem Ziel charakterisiert, abzuschätzen;
wobei die Blindentfaltung eine iterative Blindentfaltung ist, wobei die Zielfunktion und die Punktspreizfunktion abgeschätzt und aktualisiert werden durch Wechseln (S12, S14) zwischen den folgenden Gleichungen:

$$F_{i+1}(k,l) = P_1[G(k,l) \cdot \frac{H_i^*(k,l)}{\left|H_i(k,l)\right|^2 + \frac{\sigma_\omega^2}{\sigma_f^2}}],$$

$$H_{i+1}(k,l) = P_2[G(k,l) \cdot \frac{F_{i+1}^*(k,l)}{\left|F_{i+1}(k,l)^2\right| + \frac{\sigma_\omega^2}{\sigma_h^2 \, | H_0(k,l) |^2}}]$$

oder zwischen den folgenden Gleichungen:

$$H_{i+1}(k,l) = P_1[G(k,l) \cdot \frac{F_i^{*}(k,l)}{|F_i(k,l)|^2 + \frac{\sigma_\omega^2}{\sigma_h^2 \, |H_0(k,l)|^2}}],$$

$$F_{i+1}(k,l) = P_2[G(k,l) \cdot \frac{H_{i+1}^{*}(k,l)}{|H_{i+1}(k,l)^2| + \frac{\sigma_\omega^2}{\sigma_f^2}}]$$

wobei

F(k,1), H(k,1) und G(k,1) jeweils die diskreten Fourier-Transformationen von f(m,n), der abgeschätzten Zielfunktion, h(m,n), der abgeschätzten Funkspreizfunktion, und g(m,n), von Daten, die das Bild bzw. das Segment darstellen, sind,

m, n Ortsbereichsindizes sind, die jeweils einer axialen und einer seitlichen Richtung entsprechen, wobei die axiale Richtung die Richtung entlang einer Pulsausbreitung der akustischen oder Ultraschall-Wellen ist und die seitliche Richtung senkrecht zu der axialen Richtung ist;

i eine Iterationszahl ist,

$P_1$ und $P_2$ Projektionsoperatoren sind, die in jeder Iteration angewendet werden, um Bedingungen für die abgeschätzten Funktionen durchzusetzen,

$\sigma_f$, $\beta_h$ und $\sigma_\omega$, jeweils die Standardabweichung der Zielfunktion, der Punktspreizfunktion und des Rauschens sind; und die Hochstellung * komplexe Konjugation bezeichnet; und

wobei wenigstens eine der folgenden Bedingungen durchgesetzt ist:

i) Ein bekanntes Trägergebiet wird für die Targetfunktion angenommen und alle Werte außerhalb des Trägergebiets werden Null gesetzt;

ii) Ein bekanntes Trägergebiet, das identisch mit der Größe der Bilddaten ist, wird für die Zielfunktion angenommen und alle Werte außerhalb des Trägergebiets werden Null gesetzt;

iii) Ein bekanntes Trägergebiet wird für die Punktspreizfunktion angenommen und alle Werte außerhalb des Trägergebietes werden Null gesetzt;

iv) Nach Abschätzen des Trägergebietes der Punktspreizfunktion und der Aktualisierung davon, wird die Amplitude der neuen Abschätzung basierend auf einer Entropie-Maximierung binarisiert, wird Dilatation durchgeführt und die resultierende Maske spezifiziert das Trägergebiet der Punktspreizfunktion;

v) Die Punktspreizfunktion wird mit Erwartungswert Null angenommen;

vi) Die Zielfunktion wird mit Erwartungswert Null angenommen; und

vii) Die Einhüllenden von wenigstens der fundamentalen und zweiten harmonischen Komponenten des Bildes des Ziels bzw. des Segments davon werden gemittelt.

**2.** Verfahren nach Anspruch 1, wobei die Bedingungen i) bis vii) alle durchgesetzt werden.

**3.** Verfahren nach Anspruch 1 oder 2, wobei die Blindentfaltung dazu verwendet wird, die anfängliche Abschätzung der Punktspreizfunktion zu erhalten, und die Zielfunktion für die Iteration eine homomorphischen Blindentfaltung ist.

**4.** Verfahren nach Anspruch 3, wobei die homomorphische Blindentfaltung, die verwendet wird, um die anfängliche Abschätzung der Punktspreizfunktion zu erhalten, beinhaltet
eine homomorphische Entfaltung auf jeden von wenigstens zwei aufeinander folgenden Frames, und vorzugsweise auf jeden von drei aufeinander folgendem Frames, wobei aufeinander folgende Frames Bild- oder Segmentversionen sind, die an aufeinander folgenden Zeiten erlangt werden; und
Mitteln der wenigstens zwei abgeschätzten Punktspreizfunktionen, und entsprechend vorzugsweise der drei abgeschätzten Punktspreizfunktionen, um die anfängliche Abschätzung zu erhalten.

**5.** Verfahren nach einem der vorhergehenden Ansprüche, wobei die Anzahl der Iteration der iterativen Blindentfaltung der Entfaltungsprozedur (S1) größer als Zwei ist und vorzugsweise Drei ist.

6. Verfahren nach einem der vorhergehenden Ansprüche, wobei die iterative Blindentfaltung der Entfaltungsprozedur (S1) auf einem Bayesschen Ansatz basiert, das heißt basierend auf einer Abschätzung der Punktspreizfunktion und der Zielfunktion durch Suchen nach der höchstwahrscheinlichsten Punktspreizfunktion und Ziel funktion bei gegebenem gesamtem Bild bzw. gesamten Segment.

7. Bildverarbeitungsverfahren, das auf ein Bild eines Ziels angewendet wird, wobei das Ziel ein abgebildetes Medium ist, das durch akustische oder Ultraschall-Wellen untersucht wird, wobei das Verfahren
eine lokale Entfaltungsprozedur (S4) beinhaltet, die beinhaltet
eine Aufteilung (S42) des Bildes in Bildsegmente,
eine iterative Blindentfaltung (S44) jedes Segments einzeln, beinhaltend das Verfahren nach einem der Ansprüche 1 bis 6, angewendet auf jedes Segment, um eine lokale Punktspreizfunktion und eine lokale Zielfunktion abzuschätzen, und
eine Abschätzung (S46) der Zielfunktion für das gesamte Bild basierend auf der lokalen Zielfunktion.

8. Verfahren nach Anspruch 7, wobei Aufteilen (S42) der Bilddaten in Bildsegmente nur in der axialen Richtung, nur in der seitlichen Richtung oder beides in den axialen und seitlichen Richtungen vorgenommen wird.

9. Bildverarbeitungsverfahren, das auf ein Bild eines Ziels angewendet wird, wobei das Ziel ein untersuchtes abgebildetes Medium ist, wobei das Verfahren beinhaltet
eine globale Entfaltungsprozedur (S2), die das Verfahren nach einem der Ansprüche 1 bis 6 beinhaltet, angewendet auf das gesamte Bild, um eine Punktspreizfunktion, die den Abbildungsprozess charakterisiert, und eine Zielfunktion abzuschätzen, die die Verteilung von Reflektoren und Streuern in dem Ziel charakterisiert; und
eine lokale Entfaltungsprozedur (S4), die beinhaltet
eine Teilung (S42) des Bildes in Bildsegmente,
eine iterative Blindentfaltung (S44) jedes Segmentes einzeln, beinhaltend das Verfahren nach Anspruch 1 oder 2, um eine lokale Punktspreizfunktion und eine lokale Zielfunktion abzuschätzen, wobei eine anfängliche Abschätzung in der iterativen Blindentfaltung (S44) auf einer Ausgabe der globalen Entfaltungsprozedur (S2) basiert, und
eine Abschätzung (S46) der Zielfunktion für das gesamte Bild basierend auf den lokalen Zielfunktionen.

10. Verfahren nach Anspruch 9, wobei Teilen (S42) der Bilddaten in Bildsegmente nur in der axialen Richtung, nur in der seitlichen Richtung oder Beides in den axialen und seitlichen Richtungen vorgenommen wird.

11. Verfahren nach Anspruch 9 oder 10, wobei eine anfängliche Abschätzung in der iterativen Blindentfaltung (S44) der lokalen Entfaltungsprozedur (S4) auf einer Ausgabe der globalen Entfaltungszprozedur (S2) basiert, durch Verwenden entweder der Punktspreizfunktion, die durch eine globale Entfaltungsprozedur (S2) abgeschätzt wurde, oder der Zielfunktion, die durch die globale Entfaltungsprozedur (S2) abgeschätzt wurde.

12. Bildverarbeitungseinheit (10) zum Verarbeiten eines Bildes eines Ziels oder eines Segments eines Bild eines Zieles, wobei das Ziel ein abgebildetes Medium ist, das durch akustische oder Ultraschall-Wellen untersucht wird, wobei die Einheit (10) dazu eingerichtet ist, eine Blindentfaltung des gesamten Bildes bzw. des gesamten Segments auszuführen, um eine Punktspreizfunktion, die den Abbildungsprozess charakterisiert, und eine Zielfunktion abzuschätzen, die die Verteilung von Reflektoren und Streuern in dem Ziel charakterisiert;
wobei die Blindentfaltung eine iterative Blindentfaltung ist, wobei die Zielfunktion und die Punktspreizfunktion geschätzt und aktualisiert werden durch Wechseln zwischen den folgenden Gleichungen:

$$F_{i+1}(k,l) = P_1[G(k,l) \cdot \frac{H_i^*(k,l)}{|H_i(k,l)|^2 + \frac{\sigma_\omega^2}{\sigma_f^2}}],$$

$$H_{i+1}(k,l) = P_2[G(k,l) \cdot \frac{F_{i+1}^{*}(k,l)}{\left|F_{i+1}(k,l)^2\right| + \frac{\sigma_{\omega}^2}{\sigma_h^2 |H_0(k,l)|^2}}]$$

oder den folgenden Gleichungen:

$$H_{i+1}(k,l) = P_1[G(k,l) \cdot \frac{F_i^{*}(k,l)}{\left|F_i(k,l)\right|^2 + \frac{\sigma_{\omega}^2}{\sigma_h^2 |H_0(k,l)|^2}}],$$

$$F_{i+1}(k,l) = P_2[G(k,l) \cdot \frac{H_{i+1}^{*}(k,l)}{\left|H_{i+1}(k,l)^2\right| + \frac{\sigma_{\omega}^2}{\sigma_f^2}}]$$

wobei

F(k,1), H(k,1) und G(k,1) jeweils die diskreten Fourier-Transformationen von f(m,n), der abgeschätzten Zielfunktion, h(m,n), der abgeschätzten Punktspreizfunktion, und g(m,n), von Daten, die das Bild bzw. das Segment darstellen, sind,

m, n Ortsbereichsindizes sind, die jeweils einer axialen oder seitlichen Richtung entsprechen, wobei die axiale Richtung eine Richtung entlang einer Pulsausbreitung der akustischen oder Ultraschallwellen ist und die seitliche Richtung senkrecht zur axialen Richtung ist,

i eine Iterationszahl ist,

$P_1$ und $P_2$ Projektionsoperatoren sind, die in jeder Iteration angewendet werden, um Bedingungen für die abgeschätzten Funktionen durchzusetzen,

$\sigma_f$, $\sigma_h$ und $\sigma_{\omega}$ jeweils die Standardabweichung der Zielfunktion, der Punktspreizfunktion und des Rauschens sind; und die Hochstellung * komplexe Konjugation bezeichnet; und

wobei wenigstens eine der folgenden Bedingungen durchgesetzt wird:

i) Ein bekanntes Trägergebiet wird für die Zielfunktion angenommen und alle Werte außerhalb des Trägergebiets werden Null gesetzt;

ii) Ein bekanntes Trägergebiet identisch mit der Größe der Bilddaten wird für die Zielfunktion angenommen und alle Werte außerhalb des Trägergebiets werden Null gesetzt;

iii) Ein bekanntes Trägergebiet wird für die Punktspreizfunktion angenommen und alle Werte außerhalb des Trägergebietes werden Null gesetzt;

iv) Nach Abschätzen des Trägergebiets der Punktspreizfunktion und der Aktualisierung davon, werden die Amplitude der neuen Abschätzung basierend auf einer Entropie-Maximierung binarisiert, wird Dilatation durchgeführt und die resultierende Maske spezifiziert das Trägergebiet der Punktspreizfunktion;

v) Die Punktspreizfunktion wird mit Erwartungswert Null angenommen;

vi) Die Zielfunktion wird mit Erwartungwert Null angenommen; und

vii) Die Einhüllenden von wenigstens der fundamentalen und zweiten harmonischen Komponenten des Bildes des Ziels bzw. des Segments davon werden gemittelt.

13. Bildverarbeitungseinheit (10) nach Anspruch 12, die eingerichtet ist, so dass die Bedingungen i) bis vii) alle durchgesetzt werden.

14. Bildverarbeitungseinheit (10) nach Anspruch 12 oder 13, die eingerichtet ist, so dass die Blindentfaltung, die verwendet wird, um die anfängliche Abschätzung der Punktspreizfunktion und der Zielfunktion für die Iteration zu erhalten, eine homomorpohische Blindentfaltung ist.

**15.** Bildverarbeitungseinheit (10) nach Anspruch 14, eingerichtet, so dass die homomorphische Blindentfaltung, die verwendet wird, um die anfängliche Abschätzung der Punktspreizfunktion zu erhalten, beinhaltet
eine homomorphische Entfaltung auf jeden von wenigstens zwei aufeinander folgenden Frames, und vorzugsweise auf jeden von drei aufeinander folgenden Frames, wobei aufeinander folgende Frames Bild- oder Segmentversionen sind, die an aufeinander folgenden Zeiten erlangt werden, und
Mitteln der wenigstens zwei abgeschätzten Punktspreizfunktionen, und jeweils vorzugsweise der drei abgeschätzten Punktspreizfunktionen, um die anfängliche Abschätzung zu erhalten.

**16.** Bildverarbeitungseinheit (10) nach einem der Ansprüche 12 bis 15, die eingerichtet ist, so dass die Anzahl der Iterationen der iterativen Blindentfaltung, die durch die Einheit (10) ausgeführt wird, größer als Zwei ist und vorzugsweise Drei ist.

**17.** Bildverarbeitungseinheit (10) nach einem der Ansprüche 12 bis 16, die eingerichtet ist, so dass die iterative Blindentfaltung, die von der Einheit (10) ausgeführt wird, auf einen Bayesschen Ansatz basiert, basierend auf einer Abschätzung der Punktspreizfunktion und Zielfunktion durch Suchen nach der höchstwahrscheinlichsten Punktspreizfunktion und Zielfunktion bei gegebenem gesamtem Image bzw. gesamtem Segment.

**18.** Bildverarbeitungsvorrichtung (1), dazu eingerichtet, ein Bild eines Ziels zu verarbeiten, wobei das Ziel ein untersuchtes abgebildetes Medium ist, wobei die Vorrichtung beinhaltet
eine Lokalentfaltungseinheit (4), die eine Bildverarbeitungseinheit (10) nach einem der Ansprüche 12 bis 17 beinhaltet, wobei die Lokalentfaltungseinheit (4) eingerichtet ist zum
Aufteilen (S42) des Bildes in Bildsegmente,
Ausführen einer iterativen Blindentfaltung (S44) jedes Segments einzeln, durch Veranlassen ihrer Bildverarbeitungseinheit (10), die Blindentfaltung jedes Segments auszuführen, um die entsprechende lokale Punktspreizfunktion und entsprechende lokale Zielfunktion abzuschätzen, und
eine Abschätzung (S46) der Zielfunktion für das gesamte Bild basierend auf den lokalen Zielfunktionen.

**19.** Bildverarbeitungsvorrichtung (1) nach Anspruch 18, die eingerichtet ist, so dass Aufteilen (S42) der Bilddaten in Bildsegmente nur in der axialen Richtung, nur in der seitlichen Richtung oder beides in den axialen und seitlichen Richtungen vorgenommen wird.

**20.** Bildverarbeitungsvorrichtung (1) eingerichtet, um ein Bild eines Ziels zu verarbeiten, wobei das Ziel ein abgebildetes Medium ist, das durch akustische oder Ultraschall-Wellen untersucht wird, wobei die Vorrichtung beinhaltet
eine Globalentfaltungseinheit (2), die eine Bildverarbeitungseinheit (10) nach einem der Ansprüche 12 bis 17 beinhaltet, wobei die Globalentfaltungseinheit (2) dazu eingerichtet ist, ihre Bildverarbeitungseinheit (10) zu veranlassen, die Blindentfaltung auf dem gesamten Bild auszuführen, um eine Punktspreizfunktion, die die Bildverarbeitung charakterisiert, und eine Zielfunktion, die die Verteilung von Reflektoren und Streuern in dem Ziel charakterisiert, abzuschätzen; und
eine Lokalentfaltungseinheit (4), die weiterhin eine Bildverarbeitungseinheit (10') beinhaltet nach Anspruch 12 oder 13, wobei die Lokalentfaltungseinheit (4) eingerichtet ist zum
Aufteilen (S42) des Bildes in Bildsegmente, Ausführen einer iterativen Blindentfaltung (S44) jedes Segmentes einzeln, durch Veranlassen ihrer Bildverarbeitungseinheit (10') die Blindentfaltung jedes Segmentes auszuführen, um die entsprechende lokale Punktspreizfunktion und entsprechende lokale Zielfunktion abzuschätzen, wobei eine anfängliche Abschätzung in der iterativen Blindentfaltung (S44) auf einer Ausgabe der Globalentfaltungseinheit (2) basiert, und
Abschätzen (S46) einer Zielfunktion für das gesamte Bild basierend auf den lokalen Zielfunktionen.

**21.** Vorrichtung (1) nach Anspruch 20, die eingerichtet ist, so dass Aufteilen (S42) der Bilddaten in Bildsegmente nur in der axialen Richtung, nur in der seitlichen Richtung oder beides in den axialen und seitlichen Richtungen vorgenommen wird.

**22.** Vorrichtung (1) nach Anspruch 20 oder 21, eingerichtet, so dass eine anfängliche Abschätzung der iterativen Blindentfaltung ($S_{44}$), die durch die Lokalentfaltungseinheit (4) ausgeführt wird, auf einer Ausgabe der Globalentfaltungseinheit (2) basiert, durch Verwenden entweder der Punktspreizfunktion, die durch eine Globalentfaltungseinheit (2) abgeschätzt wird, oder der Zielfunktion, die durch die Globalentfaltungseinheit (2) abgeschätzt wird.

**23.** Computerprogramm, dazu eingerichtet, wenn es auf einem Computer ausgeführt wird, zu veranlassen, eines der Verfahren nach Anspruch 1 bis 11 auszuführen.

24. Abtasteinrichtung zum Erhalten eines Bildes eines Ziels, wobei das Ziel ein untersuchtes, abgebildetes Medium ist, wobei die Abtasteinrichtung eine Bildverarbeitungseinheit (10) nach einem der Ansprüche 12 bis 17 umfasst oder eine Bildverarbeitungsvorrichtung (1) nach einem der Ansprüche 18 bis 22 umfasst.

**Revendications**

1. Procédé de traitement d'images appliqué à une image d'une cible ou sur un segment d'une image d'une cible, la cible étant un support imagé sondé par des ondes ultrasonores ou acoustiques, le procédé comportant

une procédure de déconvolution (S1) comportant respectivement une déconvolution aveugle de toute l'image, ou de tout le segment, pour estimer une fonction d'étalement du point caractérisant le processus de formation d'images et une fonction cible caractérisant la distribution de réflecteurs et de diffuseurs dans la cible;

où la déconvolution aveugle est une déconvolution itérative aveugle dans laquelle la fonction cible et la fonction d'étalement du point sont estimées et actualisées en alternant (S12, S14) entre les équations suivantes :

$$F_{i+1}(k,l) = P_1 \left[ G(k,l). \frac{H_i^*(k,l)}{\left|H_i(k,l)\right|^2 + \frac{\sigma_w^2}{\sigma_f^2}} \right],$$

$$H_{i+1}(k,l) = P_2 \left[ G(k,l). \frac{F_{i+1}^*(k,l)}{\left|F_{i+1}(k,l)\right|^2 + \frac{\sigma_w^2}{\sigma_h^2 \left|H_0(k,l)\right|^2}} \right],$$

ou entre les équations suivantes:

$$H_{i+1}(k,l) = P_1 \left[ G(k,l). \frac{F_i^*(k,l)}{\left|F_i(k,l)\right|^2 + \frac{\sigma_w^2}{\sigma_h^2 \left|H_0(k,l)\right|^2}} \right],$$

$$F_{i+1}(k,l) = P_2 \left[ G(k,l). \frac{H_{i+1}^*(k,l)}{\left|H_{i+1}(k,l)\right|^2 + \frac{\sigma_w^2}{\sigma_f^2}} \right]$$

où

$F(k, 1)$, $H(k, l)$ et $G(k, l)$ sont respectivement les transformées de Fourier discrètes de $f(m,n)$, la fonction cible estimée, $h(m,n)$, la fonction d'étalement du point estimée, et $g(m,n)$, des données représentant l'image, ou le segment respectivement,

$m, n$ sont les indices de domaine spatial correspondant respectivement à une direction axiale et une direction latérale, avec la direction axiale étant la direction le long d'une propagation d'impulsion des ondes ultrasonores ou acoustiques et la direction latérale étant perpendiculaire à la direction axiale,

$i$ est le nombre d'itérations,

$P_1$ et $P_2$ sont des opérateurs de projection appliqués à chaque itération pour appliquer des contraintes aux fonctions estimées,

$\sigma_f$, $\sigma_h$, $\sigma_\omega$ sont respectivement la déviation standard de la fonction cible, la fonction d'étalement du point et le bruit ; et l'exposant * signifie une conjugaison complexe ; et

où au moins l'une des contraintes suivantes est appliqués :

i) une région de support connue est admise pour la fonction cible et toutes les valeurs en dehors de la région de support sont réglées à zéro ;

ii) une région de support connue identique à la taille des données d'images est admise pour la fonction cible et toutes les valeurs en dehors de la région de support sont réglées à zéro ;

iii) une zone de support connue est admise pour la fonction d'étalement du point et toutes les valeurs en dehors de la région de support sont réglées à zéro ;

iv) après l'estimation de la région de support de la fonction d'étalement du point et sa mise à jour, l'amplitude de la nouvelle estimation est binarisée sur la base d'une maximisation de l'entropie, une dilatation est effectuée et le masque résultant spécifie la région de support de la fonction d'étalement du point ;

v) la fonction d'étalement du point est supposée avoir une moyenne nulle ;

vi) la fonction cible est supposée avoir une moyenne nulle ; et

vii) les moyennes des enveloppes d'au moins le deuxième composant harmonique et le composant fondamental de l'image de la cible, ou son segment respectivement, sont calculées.

2. Procédé de la revendication 1, dans lequel les contraintes i) à vii) sont toutes appliquées.

3. Procédé de la revendication 1 ou 2, dans lequel la déconvolution aveugle utilisée pour obtenir l'estimation initiale de la fonction d'étalement du point et de la fonction cible pour l'itération est une déconvolution homomorphique aveugle.

4. Procédé de la revendication 3, dans lequel la déconvolution homomorphique aveugle utilisée pour obtenir l'estimation initiale de la fonction d'étalement du point comporte

une déconvolution homomorphique sur chacune des au moins deux trames consécutives, et de préférence sur chacune des trois trames consécutives, où les trames consécutives sont des versions d'image ou de segment acquises à des moments consécutifs, et

le fait de calculer la moyenne des au moins deux fonctions d'étalement du point estimées, et respectivement de préférence les trois fonctions d'étalement du point estimées, pour obtenir l'estimation initiale.

5. Procédé selon l'une quelconque des revendications précédentes, dans lequel le nombre d'itérations de la déconvolution aveugle itérative de la procédure de déconvolution (SI) est plus grand que 2, et est de préférence 3.

6. Procédé selon l'une quelconque des revendications précédentes, dans lequel la déconvolution itérative aveugle de la procédure de déconvolution (S1) est basée sur une démarche bayésienne, c'est à dire basée sur une estimation de la fonction d'étalement du point et de la fonction cible en recherchant respectivement la fonction d'étalement du point la plus probable et la fonction cible donnant toute l'image, ou tout le segment.

7. Procédé de traitement d'image appliqué à une image d'une cible, la cible étant un support imagé sondé par des ondes ultrasonores ou acoustiques, le procédé comportant

une procédure de déconvolution locale (S4) comportant

une division (S42) de l'image en segments d'image,

une déconvolution aveugle itérative (S44) de chaque segment séparément, comportant le procédé selon l'une quelconque des revendications 1 à 6 appliqué à chaque segment, pour estimer une fonction d'étalement du point locale et une fonction cible locale, et

une estimation (S46) de la fonction cible pour toute l'image sur la base des fonctions cibles locales.

8. Procédé de la revendication 7, dans lequel la division (S42) des données d'images en segments d'images se fait uniquement dans la direction axiale, seulement dans la direction latérale, ou à la fois dans les directions axiale et latérale.

9. Procédé de traitement d'images appliqué à une image d'une cible, la cible étant un support imagé, sondé le procédé comportant

une procédure de déconvolution globale (S2), comportant le procédé selon l'une quelconque des revendications 1 à 6 appliqué à toute l'image, pour estimer une fonction d'étalement du point caractérisant le processus de formation d'images et une fonction cible caractérisant la distribution de réflecteurs et de diffuseurs dans la cible ; et

une procédure de déconvolution locale (S4) comportant

une division (S42) de l'image en segments d'image,

une déconvolution aveugle itérative (S44) de chaque segment séparément, comportant le procédé selon la revendication 1 ou 2, pour estimer une fonction d'étalement du point locale et une fonction cible locale, où une estimation initiale dans la déconvolution itérative aveugle (S44) est basée sur une sortie de la procédure de déconvolution globale (S2), et
une estimation (S46) de la fonction cible pour toute l'image basée sur les fonctions cibles locales.

**10.** Procédé de la revendication 9, dans lequel la division (S42) des données d'images en segments d'images se fait uniquement dans la direction axiale, seulement dans la direction latérale ou dans les directions axiale et latérale à la fois.

**11.** Procédé de la revendication 9 ou 10, dans lequel une estimation initiale dans la déconvolution itérative aveugle (S44) de la procédure de déconvolution locale (S4) est basée sur une sortie de la procédure de déconvolution globale (S2), en utilisant soit la fonction d'étalement du point estimée par une procédure de déconvolution globale (S2) soit la fonction cible estimée par la procédure de déconvolution globale (S2).

**12.** Unité de traitement d'images (10) destinée à traiter une image d'une cible ou un segment d'une image d'une cible, la cible étant un support imagé sondé par des ondes ultrasonores ou acoustiques,
l'unité (10) étant configurée pour effectuer une déconvolution aveugle de toute l'image, ou de tout le segment respectivement, pour estimer une fonction d'étalement du point caractérisant le processus de formation d'images et une fonction cible caractérisant la distribution de réflecteurs et de diffuseurs dans la cible;
où ladite déconvolution aveugle est une déconvolution aveugle itérative dans laquelle la fonction cible et la fonction d'étalement du point sont estimées et actualisées en alternant entre les équations suivantes :

$$F_{i+1}(k,l) = P_1 \left[ G(k,l) . \frac{H_i^*(k,l)}{\left| H_i(k,l) \right|^2 + \frac{\sigma_w^2}{\sigma_f^2}} \right],$$

$$H_{i+1}(k,l) = P_2 \left[ G(k,l) . \frac{F_{i+1}^*(k,l)}{\left| F_{i+1}(k,l) \right|^2 + \frac{\sigma_w^2}{\sigma_h^2 \left| H_0(k,l) \right|^2}} \right],$$

ou entre les équations suivantes:

$$H_{i+1}(k,l) = P_1 \left[ G(k,l) . \frac{F_i^*(k,l)}{\left| F_i(k,l) \right|^2 + \frac{\sigma_w^2}{\sigma_h^2 \left| H_0(k,l) \right|^2}} \right],$$

$$F_{i+1}(k,l) = P_2 \left[ G(k,l) . \frac{H_{i+1}^*(k,l)}{\left| H_{i+1}(k,l) \right|^2 + \frac{\sigma_w^2}{\sigma_f^2}} \right]$$

où
$F(k, l)$, $H(k, l)$ et $G(k, l)$ sont respectivement les transformées de Fourier discrètes de $f(m,n)$, la fonction cible estimée, $h(m,n)$, la fonction d'étalement du point estimée, et $g(m,n)$, des données représentant l'image, ou le segment respectivement,
$m, n$ sont les indices de domaine spatial correspondant respectivement à une direction axiale et une direction latérale, avec la direction axiale étant la direction le long d'une propagation d'impulsion des ondes ultrasonores ou acoustiques et la direction latérale étant perpendiculaire à la direction axiale,

*i* est le nombre d'itérations,

$P_1$ et $P_2$ sont des opérateurs de projection appliqués à chaque itération pour appliquer des contraintes aux fonctions estimées,

$\sigma_f$, $\sigma_h$, $\sigma_\omega$ sont respectivement la déviation standard de la fonction cible, la fonction d'étalement du point et le bruit ; et l'exposant * signifie une conjugaison complexe ; et

où au moins l'une des contraintes suivantes est appliquée :

    i) une région de support connue est admise pour la fonction cible et toutes les valeurs en dehors de la région de support sont réglées à zéro ;

    ii) une région de support connue identique à la taille des données d'images est admise pour la fonction cible et toutes les valeurs en dehors de la région de support sont réglées à zéro ;

    iii) une zone de support connue est admise pour la fonction d'étalement du point et toutes les valeurs en dehors de la région de support sont réglées à zéro ;

    iv) après l'estimation de la région de support de la fonction d'étalement du point et sa mise à jour, l'amplitude de la nouvelle estimation est binarisée sur la base d'une maximisation de l'entropie, une dilatation est effectuée et le masque résultant spécifie la région de support de la fonction d'étalement du point ;

    v) la fonction d'étalement du point est supposée avoir une moyenne nulle ;

    vi) la fonction cible est supposée avoir une moyenne nulle ; et

    vii) les moyennes des enveloppes d'au moins le deuxième composant harmonique et le composant fondamental de l'image de la cible, ou son segment respectivement, sont calculées.

**13.** Unité de traitement d'images (10) de la revendication 12, configurée de sorte que i) à vii) soient toutes appliquées.

**14.** Unité de traitement d'images (10) de la revendication 12 ou 13, configurée de sorte que la déconvolution aveugle utilisée pour obtenir l'estimation initiale de la fonction d'étalement du point et de la fonction cible pour l'itération soit une déconvolution homomorphique aveugle.

**15.** Unité de traitement d'images (10) de la revendication 14, configurée de sorte que la déconvolution homomorphique aveugle utilisée pour obtenir l'estimation initiale de la fonction d'étalement du point comporte

une déconvolution homomorphique sur chacune des au moins deux trames consécutives, et de préférence sur chacune des trois trames consécutives, où les trames consécutives sont des versions d'image ou de segment acquises à des moments consécutifs, et

le fait de calculer la moyenne des au moins deux fonctions d'étalement du point, et respectivement de préférence les trois fonctions d'étalement du point estimées, pour obtenir l'estimation initiale.

**16.** Unité de traitement d'images (10) selon l'une quelconque des revendications 12 à 15, configurée de sorte que le nombre d'itérations de la déconvolution itérative aveugle, réalisées par l'unité (10) soit supérieure à 2, et soit de préférence 3.

**17.** Unité de traitement d'images (10) selon l'une quelconque des revendications 12 à 16, configurée de sorte que la déconvolution aveugle itérative réalisée par l'unité (10) est basée sur une approche bayésienne, basée sur une estimation de la fonction d'étalement du point et de la fonction cible en cherchant la fonction d'étalement du point la plus probable et la fonction cible donnant toute l'image, ou un segment entier respectivement.

**18.** Appareil de traitement d'images (1) configuré pour traiter une image d'une cible, la cible étant un support imagé, sondé, l'appareil, comportant

une unité de déconvolution locale (4), comportant une unité de traitement d'images (10) selon l'une quelconque des revendications 12 à 17, l'unité de déconvolution locale (4) étant configurée pour

diviser (S42) l'image en segments d'image,

effectuer une déconvolution itérative aveugle (S44) de chaque segment séparément, en amenant son unité de traitement d'images (10) à effectuer la déconvolution aveugle de chaque segment, pour estimer la fonction d'étalement du point locale respective et la fonction cible locale respective, et

une estimation (S46) de la fonction cible pour l'image entière sur la base des fonctions cibles locales.

**19.** Appareil de traitement d'images (1) de la revendication 18, configuré de sorte que la division (S42) des données d'images en segments d'images se fasse uniquement dans la direction axiale, uniquement dans la direction latérale, ou dans les directions axiale et latérale à la fois.

**20.** Appareil de traitement d'images (1) configuré pour traiter une image d'une cible, la cible étant un support imagé, sondé par des ondes ultrasonores et acoustiques, l'appareil comportant

une unité de déconvolution globale (2), comportant une unité de traitement d'images (10) selon l'une quelconque des revendications 12 à 17, l'unité de déconvolution globale (2) étant configurée pour amener son unité de traitement d'images (10) à effectuer la déconvolution aveugle sur toute l'image, pour estimer une fonction d'étalement du point caractérisant le processus de formation d'images et une fonction cible caractérisant la distribution de réflecteurs et de diffuseurs dans la cible ; et

une unité de déconvolution locale (4) comportant une unité de traitement d'images supplémentaire (10') selon la revendication 12 ou 13, l'unité de déconvolution locale (4) étant configurée pour

diviser (S42) l'image en segments d'image,

effectuer une déconvolution itérative aveugle (S44) de chaque segment séparément, en amenant son unité de traitement d'images (10') à effectuer la déconvolution aveugle de chaque segment, pour estimer la fonction d'étalement du point locale respective et la fonction cible locale respective, où une estimation initiale de la déconvolution itérative aveugle (S44) est basée sur une sortie de l'unité de déconvolution globale (2), et

estimer (S46) une fonction cible pour toute l'image sur la base des fonctions cibles locales.

**21.** Appareil (1) de la revendication 20, configuré de sorte que la division (S42) des données d'images en segments d'images se fasse uniquement dans la direction axiale, seulement dans la direction latérale, ou dans les directions axiale et latérale à la fois.

**22.** Appareil (1) de la revendication 20 ou 21, configuré de sorte que l'estimation initiale de la déconvolution aveugle itérative (S44) réalisée par l'unité de déconvolution locale (4) est basée sur une sortie de l'unité de déconvolution globale (2), en utilisant soit la fonction d'étalement du point estimée par une unité de déconvolution globale (2) soit la fonction cible estimée par l'unité de déconvolution globale (2).

**23.** Programme informatique configuré pour amener, lorsqu'il est exécuté sur un ordinateur, l'un des procédés des revendications 1 à 11 à être réalisé.

**24.** Scanner destiné à obtenir une image d'une cible, la cible étant un support imagé, sondé, le scanner comprenant une unité de traitement d'images (10) selon l'une quelconque des revendications 12 à 17 ou comprenant un appareil de traitement d'image (1) selon l'une quelconque des revendications 18 à 22.

S1

Deconvolution procedure

S12

Estimation of PSF

S14

Estimation of target
function

**Fig. 1a**

S2

Global deconvolution procedure

S22

Estimation of (global) PSF

S24

Estimation of (global) target
function

**Fig. 1b**

S441

Local deconvolution procedure on a segment

S442

Estimation of local PSF

S444

Estimation of local target function

**Fig. 1c**

Start

S4

Local deconvolution procedure

Division into segments — S42

Iterative deconvolution
on each segment — S44

Estimation of the
target function — S46

End

# Fig. 2a

S44

from step S42

Iterative deconvolution
on each segment

k = 0

k < number of
segments

no

yes

S441 — Local deconvolution procedure on a segment

S442 — Estimation of local PSF

S444 — Estimation of local target
function

k = k + 1

to step S46

**Fig. 2b**

Start

Global deconvolution
procedure — S2

Local deconvolution procedure — S4

Division into segments — S42

Iterative deconvolution
on each segment — S44

Estimation of the
target function — S46

End

**Fig. 2c**

Image processing apparatus — 1

Image processing unit — 10

## Fig. 3a

Image processing apparatus — 1

Local deconvolution unit — 4

Dividing unit — 5

Iterative unit — 6

Image processing unit — 10

Merging unit — 7

## Fig. 3b

Image processing apparatus 1

Global deconvolution unit 2

Image processing unit 10

**Fig. 3c**

Image processing apparatus 1

Global deconvolution unit 2

Local deconvolution unit 4

**Fig. 4a**

**Fig. 4b**

(a)        (b)        (c)        (d)

**Fig. 5**

(a)  (b)  (c)  (d)

Fig. 6

Fig. 7

(a)

(b)

(c)

(d)

(e)

(f)

**Fig. 8**

(a)

(b)

(c)

(d)

(e)

(f)

**Fig. 9**

(a)

(b)

(c)

(d)

(e)

(f)

**Fig. 10**

**Fig. 11**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. Jirik ; T. Taxt.** High-resolution ultrasonic imaging using fast two-dimensional homomorphic filtering. *IEEE Trans. Ultrason. Ferroelec. Freq. Cont.,* 2006, vol. 53 (8), 1440-1448
- **T. Taxt ; R. Jirik.** Superresolution of ultrasound images using the 1st and 2nd harmonic signal. *IEEE Trans. Ultrason. Ferroelec. Freq. Cont.,* 2004, vol. 51 (2), 163-175
- **C. R. Hill ; J. C. Bamber ; G. R. ter Haar.** Physical Principles of Medical Ultrasonics. John Wiley & Sons, Inc, 2002
- **Y. Li ; J. A. Zagzebski.** Computer model for harmonic ultrasound imaging. *IEEE Trans. Ultrason. Ferroelec. Freq. Cont.,* 2000, vol. 47 (5), 1259-1272
- **M. D. Cahill ; C. Baker.** Numerical simulation of the acoustic field of a phased-array medical ultrasound scanner. *J. Acoust. Soc. Am.,* 1998, vol. 104 (4), 1274-1283
- **J. A. Jensen.** Estimation of pulses in ultrasound B-scan images. *IEEE Trans. Med. Imag.,* 1991, vol. 10 (2), 164-172
- **J. A. Jensen.** Deconvolution of ultrasound images. *Ultrasonic Imaging,* 1992, vol. 14 (1), 1-15
- **J. A. Jensen.** Estimation of in vivo pulses in medical ultrasound. *Ultrasonic Imaging,* 1994, vol. 16 (3), 190-203
- **J. L. Starck ; E. Pantin ; F. Murtagh.** *Deconvolution in astronomy: a review, Publications of the Astronomical Society of the Pacific,* 2002, vol. 114 (800), 1051-1069
- **J. Ng ; R. Prager ; N. Kingsbury ; G. Treece ; A. Gee.** Wavelet restoration of medical pulse-echo ultrasound images in an EM framework. *IEEE Trans. Ultrason. Ferroelec. Freq. Cont.,* 2007, vol. 54 (3), 550-568
- **J. A. Jensen ; J. Mathorne ; T. Gravesen ; B. Stage.** Deconvolution of in-vivo ultrasound B-mode images. *Ultrasonic Imaging,* 1993, vol. 15 (2), 122-133
- **J. A. Jensen ; P. Munk.** Computer phantoms for simulating ultrasound B-mode and cfm images. *23rd Acoustical Imaging Symposium,* 1997, 13-16
- **O. Michailovich ; D. Adam.** A novel approach to the 2-D blind deconvolution problem in medical ultrasound. *IEEE Trans. Med. Imag.,* 2005, vol. 24 (1), 86-104
- **J. L. Starck ; E. Pantin ; F. Murtagh.** Deconvolution in astronomy: a review. *Publications of the Astronomical Society of the Pacific,* 2002, vol. 114 (800), 1051-1069
- **J. N. Kapur ; P. K. Sahoo ; A. K. C. Wong.** A new method for gray-level picture thresholding using the entropy of the histogram. *Comput. Vision Graphics Image Process,* 1985, vol. 29, 273-285
- **A. V. Oppenheim ; R. W. Schafer.** Discrete Time Signal Processing. Prentice Hall, 1989
- **T. Taxt.** Comparison of cepstrum based methods for radial blind deconvolution of ultrasound images. *IEEE Trans. Ultrason. Ferroelec. Freq. Cont.,* 1997, vol. 44 (3), 666-674
- **J.A. Jensen.** Estimation of in vivo pulses in medical ultrasound. *Ultrasonic Imaging,* 1994, vol. 16 (3), 190-203
- **E. Thibaut ; J.-M. Conan.** Strict a priori constraints for maximum-likelihood blind deconvolution. *J. Opt. Soc. Am. A,* 1995, vol. 12 (3), 458-491